(19) Europäisches Patentamt
European Patent Office
Office européen des brevets

(11) **EP 2 953 184 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
*H01M 2/14* *(2006.01)* *B23K 26/00* *(2014.01)*
*B23K 26/06* *(2014.01)* *B23K 26/067* *(2006.01)*
*B23K 26/38* *(2014.01)* *B23K 26/40* *(2014.01)*

(21) Anmeldenummer: **14171222.4**

(22) Anmeldetag: **04.06.2014**

(54) **Verfahren zum Laserschneiden von Elektrodenfolien und/oder Separatorenfolien**

Method for laser cutting electrode foils and/or separator foils

Procédé de coupe au laser d'électrodes en feuilles et/ou de feuilles de séparation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.12.2015 Patentblatt 2015/50**

(73) Patentinhaber: **Laser-Mikrotechnologie Dr. Kieburg GmbH**
**12489 Berlin (DE)**

(72) Erfinder: **Kieburg, Heinz**
**12161 Berlin (DE)**

(74) Vertreter: **Arth, Hans-Lothar**
**ABK Patent Attorneys**
**Jasminweg 9**
**14052 Berlin (DE)**

(56) Entgegenhaltungen:
EP-A1- 2 570 225    WO-A1-2013/050088
JP-A- 2006 263 819    JP-A- 2007 190 587
JP-U- S54 171 639

## Beschreibung

Die vorliegende Erfindung betrifft ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat. Durch das erfindungsgemäße Verfahren wird beim Laserschneiden von Elektrodenfolien und/oder Separatorenfolien die Bildung von Partikeln auf der Oberfläche der zu schneidenden Elektrodenfolien und Separatorenfolien reduziert bzw. vermieden.

## Hintergrund der Erfindung

Als elektrochemische Energiespeicher sind Batterien für den Einmalgebrauch (auch als Primärbatterien bezeichnet) und wiederaufladbare Batterien (auch als Sekundärbatterien oder Akkumulatoren bezeichnet) bekannt. In der Regel sind Batterien aus einem oder mehreren in Serie geschalteten Grundelementen, den so genannten elektrochemischen Zellen (auch galvanische Zellen) aufgebaut.

In einer elektrochemischen Zelle ist Energie in Form von chemischer Energie gespeichert. Während des Entladungsprozesses wird diese Energie über eine elektrochemische Reaktion in elektrische Energie umgewandelt. Die elektrochemische Reaktion findet in zwei Teilreaktionen an zwei Elektroden statt, welche durch einen Elektrolyten räumlich und elektrisch voneinander getrennt sind. Bei vielen Bautypen von Batterien (insbesondere vieler Akkumulatoren) liegen die Elektroden in Form von blattartigen Platten, den so genannten Elektrodenblättern, vor, die räumlich von einem ebenfalls blattartigen, isolierenden Separator, dem so genannte Separatorenblatt, getrennt werden und wobei der Separator von dem verwendeten Elektrolyten durchtränkt ist.

Es besteht ein immer weiter wachsender Bedarf an Batterien, besonders an Sekundärbatterien, um die Energie für die steigende Anzahl an tragbaren elektronischen Geräten aus dem Bereich der Unterhaltungselektronik (u.a. Mobiltelefone, Laptops und Tablet-PCs), der Werkzeuge (u.a. Bohrmaschinen und Taschenlampen), Küchengeräte, etc. aber auch für Elektrofahrzeuge bereitzustellen. Bei der Verwendung von Sekundärbatterien wird in der Regel neben einer hohen Zahl an Lade-Entlade-Zyklen eine möglichst hohe bereitgestellte Energie bei geringem Batterievolumen, d.h. eine hohe Energiedichte, angestrebt. Ein besonderer Fokus liegt hierbei in den letzten Jahren auf Sekundärbatterien in Form von Lithium-Ionen-Akkus.

Folglich werden sowohl die Elektroden als auch die Separatoren zur Herstellung von Sekundärbatterien in sehr großen Stückzahlen benötigt. In der Regel werden die Elektroden und Separatoren zunächst in langen Bahnen hergestellt, aus denen dann die einzelnen Elektrodenblätter bzw. Separatorenblätter herausgetrennt werden.

Als Standardverfahren zum Heraustrennen der Elektrodenblätter und Separatorenblätter gilt nach wie vor aufgrund des hohen Materialdurchsatzes das mechanische Schneiden bzw. Stanzen. Nachteilig beim Stanzverfahren sind jedoch unter anderem Verformungen der Schnittkante, die durch die mechanische Einwirkung des Schneidwerkzeuges entstehen. Hierbei kann es auch zum Abrieb von Partikeln kommen, die die Oberfläche der Elektrodenblätter bzw. Separatorenblätter verunreinigen. Hinzu kommt die Materialermüdung der Schneidwerkzeuge, die in einer ungleichmäßigen Qualität der Schnittkanten und somit des ganzen Erzeugnisses resultiert.

Zunehmend wird daher zum Heraustrennen der Elektrodenblätter und Separatorenblätter das Schneiden mittels Laserstrahlung verwendet. Dies hat signifikante Vorteile gegenüber dem Stanzverfahren, da es einerseits keine mechanischen Kräfte auf die Schnittkante wirken und es zudem nicht zu einer Ermüdung des Schneidwerkzeuges kommt. Darüber hinaus kann beim Laserschneiden der Schnittweg des Lasers äußerst flexibel an die zu schneidende Form angepasst und damit an die Erfordernisse des jeweiligen Bautyps einer Batterie angepasst werden kann. Um beim Laserschneiden ähnliche hohe Durchsatzraten zu erzielen wie beim klassischen Stanzverfahren, werden in der Regel stark fokussierte Laserstrahlen mit möglichst hoher Energiedichte im Fokus verwendet. Im Stand der Technik wurde in den letzten Jahren das so genannte Remote-Laserschneiden etabliert. Hierbei werden über ein spezielles optisches System mit langer Brennweite sehr energiereiche Laserstrahlen auf das zu schneidende Objekt fokussiert. Durch die lange Brennweite der verwendeten Optik ist es hierbei in Kombination mit Galvanometer-Scanspiegeln möglich, den Laserstrahl mit hoher Geschwindigkeit über das zu schneidende Objekt zu führen und dabei Schneidgeschwindigkeiten von mehreren Metern pro Sekunde zu erreichen.

Ein Problem das jedoch immer wieder beim Laserschneiden im Stand der Technik auftritt ist, dass es bei dem thermischen Prozess, der dem Laserschneiden zugrunde liegt, an der Schnittkante ebenfalls zu hervorstehenden Unregelmäßigkeiten (ähnlich einer Schweißnaht) kommen kann. Zudem wird beim Laserschneiden beobachtet, dass Partikel aus dem Schmelzbereich herausgeschleudert werden und sich dann auf der Oberfläche der zu schneidenden Elektrodenfolien und Separatorenblätter als Verunreinigungen ablagern.

Durch derartige hervorstehende Schnittkanten oder Partikel auf der Oberfläche von Elektroden kann es beim Zusammenbau der Stapel aus Elektrodenblättern und Separatorenblättern zu einem Durchstoßen der Separatorenblätter kommen. Dies kann zu Kurzschlüssen führen, die nicht nur zu einer unerwünschten Entladung der Batterie, sondern auch zu gefährlichen Bränden oder sogar Explosionen führen können.

In der Patentanmeldung WO 2013/050088 A1 wird ein Verfahren zum Laserschneiden von thermoplastischen Kunststofffasern, insbesondere Elektroden- und/oder Separatoren zum Aufbau eines elektrochemischen Energiespeichers oder von Teilchen solcher Elektroden oder Separatoren offenbart. Das Verfahren besteht darin, dass die zu schneidenden Objekte an eine Laserschneidevorrichtung herangeführt werden und diese Objekte mit der Laserschneidevorrichtung so geschnitten werden, dass an den Schnittkanten ein Verschmelzen mindestens eines Teiles der thermoplastischen Kunststofffasern durchgeführt wird.

Es ist deshalb eine Aufgabe der vorliegenden Erfindung ein optimiertes Verfahren zum Laserschneiden von Elektrodenfolien und/oder Separatorenfolien bereitzustellen, durch das qualitative Probleme aus dem Stand der Technik, insbesondere die Partikelbildung, vermieden werden können.

Diese Aufgabe wird erfindungsgemäß durch die technische Lehre der unabhängigen Ansprüche gelöst. Weitere vorteilhafte Ausgestaltungen der Erfindung ergeben sich aus den abhängigen Ansprüchen, der Beschreibung, den Figuren sowie den Beispielen.

## Beschreibung der Erfindung

Es wurde gefunden, dass man einen zum Laserschneiden von Elektrodenfolien geeigneten Laserstrahl in zwei Teilstrahlen, nämlich in einen Laserschneidstrahl und einen Lasererwärmungsstrahl durch ein optisches Element teilen kann und danach das Strahlprofil von mindestens einem Teilstrahl verändert, so dass am Bearbeitungsort beide Teilstrahlen unterschiedliche Strahldurchmesser bezeichnet mit d1 und d2 (mit d2 > d1) aufweisen und die Leistungsdichte am Bearbeitungsort in dem Randbereich definiert durch d2 - d1 größer ist, als sie bei Verwendung des ursprünglichen ungeteilten Laserstrahl gewesen wäre, und der Laserschneidstrahl bereits eine zum Laserschneiden der Elektrodenfolien und/oder Separatorenfolien ausreichende Leistungsdichte (in W/cm$^2$) am Bearbeitungsort besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte am Bearbeitungsort aber eine zur Verschmelzung und/oder Verdampfung von beim Laserschneiden entstehenden Partikeln ausreichende Leistungsdichte vor allem in dem Randbereich definiert durch d2 - d1 aufweist. Ferner wird hier eine Vorrichtung zur Ausführung dieses Verfahrens offenbart.

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasst, eine Laserlichtquelle zur Bereitstellung eines Laserstrahls, ein optisches Element zur Strahlteilung für die Erzeugung des Laserschneidstrahls und des Lasererwärmungsstrahls, zumindest ein optisches Element zur Strahlumlenkung des Laserschneidstrahls oder des Lasererwärmungsstrahls,

ein optisches Element zur Aufweitung des Laserschneidstrahls und/oder ein optisches Element zur Defokussierung des Lasererwärmungsstrahls

und ein optisches Element zur Strahlüberlagerung von Laserschneidstrahl und Lasererwärmungsstrahl.

Im Stand der Technik werden in der Regel sehr stark fokussierte Laserstrahlen mit einem möglichst steilen Intensitätsprofil zum Schneiden von Elektrodenfolien und/oder Separatorenfolien verwendet. Hierdurch sind die Energiedichte und somit auch die Leistungsdichte des Laserstrahls auf dem zu schneidenden Objekt möglichst hoch. Zusätzlich ist der Bereich um die eigentliche Schnittkante herum, der einem Laserbedingtem Temperatureinfluss unterworfen ist, die so genannte "Wärmeeinflusszone", möglichst klein. Dies führt insgesamt zu einer dünnen Schnittbreite und reduziert zugleich die zum Schneiden notwendige Verweildauer des Lasers auf einem Punkt, so dass die Schnittgeschwindigkeit erhöht werden kann.

Ein Problem beim Stand der Technik ist jedoch, dass es bei den hohen Temperaturen, die für das Laserschneiden notwendig sind, während des Schneidens zu einem explosionsartigen Ausstoß von Schmelzpartikeln aus dem Schnittbereich kommt, die sich dann auf der Oberfläche der Elektrodenfolie bzw. der Separatorenfolie ablagern.

Es hat sich überraschend herausgestellt, dass eine derartige Partikelbildung während des Laserschneidens von Elektrodenfolien und/oder Separatorenfolien durch die hierin offenbarte Vorrichtung zum Laserschneiden vermieden werden kann.

Durch die hierin offenbarte Vorrichtung zum Laserschneiden von Elektrodenfolien und/oder Separatorenfolien wird ein Laserschneidstrahl mit einer zum Laserschneiden der Elektrodenfolien und/oder Separatorenfolien ausreichenden Leistungsdichte (in W/cm$^2$) oder mit einer nach Überlagerung mit dem Lasererwärmungsstrahl zum Laserschneiden der Elektrodenfolien und/oder Separatorenfolien ausreichenden Leistungsdichte und ein Lasererwärmungsstrahl mit einer zum Laserschneiden der Elektrodenfolien und/oder Separatorenfolien nicht ausreichenden Leistungsdichte aber mit einer zur Verschmelzung und/oder Verdampfung von beim Laserschneiden entstehenden Partikeln ausreichende Leistungsdichte erzeugt und diese Laserstrahlen, also Lasererwärmungsstrahl und Laserteilstrahl, gegebenenfalls derart in ihrem Strahlprofil verändert, dass nach erfolgter Überlagerung (bzw. Superposition) des Laserschneidstrahls mit dem Lasererwärmungsstrahl und anschließender Fokussierung auf den Bearbeitungsort, der Laserschneidstrahl einen geringeren Strahldurchmesser (am Bearbeitungsort) hat und vorzugsweise auch eine höhere Leistungsdichte (am Bearbeitungsort) aufweist als der Lasererwärmungsstrahl.

Insgesamt kommt es durch diese Überlagerung von Laserschneidstrahl und Lasererwärmungsstrahl zu einer Ausdehnung der Wärmeeinflusszone um die Schnittkante herum, was überraschenderweise zu einer Reduzierung bzw. Vermeidung der Partikelbildung beim Laserschneiden von Elektroden- und/oder Separatorenfolien geführt hat.

Hierzu umfasst die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird die folgenden Komponenten:

- eine Laserlichtquelle zur Bereitstellung eines Laserstrahls
- ein optisches Element zur Strahlteilung für die Erzeugung des Laserschneidstrahls und des Lasererwärmungsstrahls aus dem Laserstrahl,
- zumindest ein optisches Element zur Strahlumlenkung des Laserschneidstrahls oder des Lasererwärmungsstrahls,
- ein optisches Element zur Aufweitung des Laserschneidstrahls und/oder ein optisches Element zur Defokussierung des Lasererwärmungsstrahls, und
- ein optisches Element zur Strahlüberlagerung von Laserschneidstrahl und Lasererwärmungsstrahl.

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasset daher ebenso, eine Laserlichtquelle zur Bereitstellung eines Laserstrahls, ein optisches Element zur Strahlteilung für die Erzeugung des Laserschneidstrahls und des Lasererwärmungsstrahls,
zumindest ein optisches Element zur Strahlumlenkung des Laserschneidstrahls oder des Lasererwärmungsstrahls,
ein optisches Element zur Aufweitung des Laserschneidstrahls,
und ein optisches Element zur Strahlüberlagerung von Laserschneidstrahl und Lasererwärmungsstrahl.

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasst daher ebenso, eine Laserlichtquelle zur Bereitstellung eines Laserstrahls, ein optisches Element zur Strahlteilung für die Erzeugung des Laserschneidstrahls und des Lasererwärmungsstrahls,
zumindest ein optisches Element zur Strahlumlenkung des Laserschneidstrahls oder des Lasererwärmungsstrahls,
ein optisches Element zur Defokussierung des Lasererwärmungsstrahls,
und ein optisches Element zur Strahlüberlagerung von Laserschneidstrahl und Lasererwärmungsstrahl.

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasst daher ebenso, eine Laserlichtquelle zur Bereitstellung eines Laserstrahls, ein optisches Element zur Strahlteilung für die Erzeugung des Laserschneidstrahls und des Lasererwärmungsstrahls,
zumindest ein optisches Element zur Strahlumlenkung des Laserschneidstrahls oder des Lasererwärmungsstrahls,
ein optisches Element zur Aufweitung des Laserschneidstrahls und ein optisches Element zur Defokussierung des Lasererwärmungsstrahls
und ein optisches Element zur Strahlüberlagerung von Laserschneidstrahl und Lasererwärmungsstrahl.

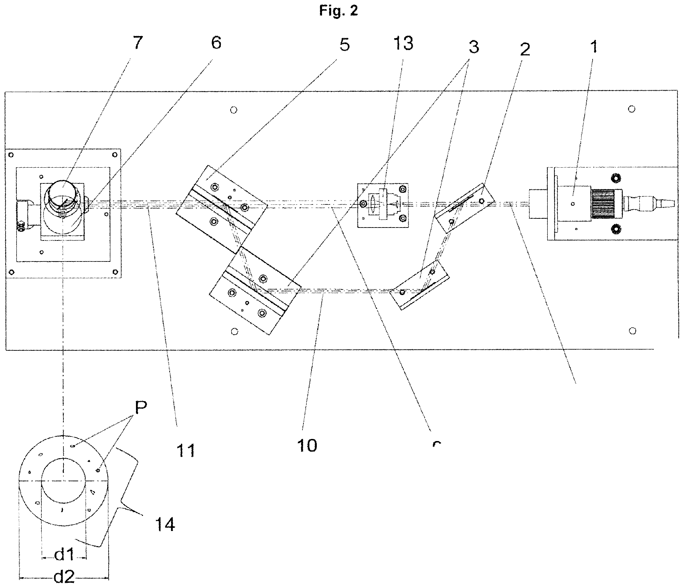

Die hierin offenbarte Vorrichtung umfasst zudem ein optisches Element zur Fokussierung, um nach der Überlagerung von Laserschneidstrahl mit dem Lasererwärmungsstrahl die beiden Laserstrahlen auf das zu schneidende Objekt bzw. auf den Bearbeitungsort zu fokussieren. Theoretisch ist es natürlich auch denkbar, dass Laserschneidstrahl und Lasererwärmungsstrahl nach Variation ihrer Strahlprofile z.B. über unterschiedliche Scanspiegel in unterschiedlichen Winkeln auf den Bearbeitungsort geleitet werden, also erst am Bearbeitungsort überlagert werden und sich dort erst die Strahlengänge von Laserschneidstrahl und Lasererwärmungsstrahl überlagern. Diese Möglichkeit wird jedoch nicht bevorzugt. Es ist hingegen bevorzugt, wenn Laserschneidstrahl und Lasererwärmungsstrahl durch ein optisches Element zur Strahlüberlagerung zunächst überlagert werden und dann in demselben Winkel auf den Bearbeitungsort fokussiert werden (siehe **Fig. 2 bis 4**).

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasst daher ebenso, eine Laserlichtquelle zur Bereitstellung eines Laserstrahls, ein optisches Element zur Strahlteilung für die Erzeugung des Laserschneidstrahls und des Lasererwärmungsstrahls,

zumindest ein optisches Element zur Strahlumlenkung des Laserschneidstrahls oder des Lasererwärmungsstrahls,

ein optisches Element zur Aufweitung des Laserschneidstrahls und/oder ein optisches Element zur Defokussierung des Lasererwärmungsstrahls

und ein optisches Element zur Strahlüberlagerung von Laserschneidstrahl und Lasererwärmungsstrahl,

des Weiteren umfassend ein optisches Element zur Fokussierung des Laserschneidstrahls und des Lasererwärmungsstrahls nach deren Überlagerung auf den Bearbeitungsort.

Mögliche **Laserlichtquellen,** teilweise auch einfach als "Laser" bezeichnet, die im Zusammenhang mit dem erfindungsgemäßen Verfahren zum Laserschneiden verwendet werden können, umfassen Gaslaser, Halbleiter-Laser (auch als Dioden-Laser bezeichnet), Farbstofflaser, Festkörperlaser sowie alle anderen für diesen Prozess geeigneten Laser. Bevorzugt werden jedoch Faserlaser.

Hierbei können sowohl kontinuierlich strahlende Laser (auch als cw-Laser, continuouswave-Laser bzw. als Dauerstrichlaser bezeichnet) als auch gepulste Laser verwendet werden.

Es wird besonders die Verwendung von Laserlichtquellen bevorzugt, die Laserstrahlen mit einem Gaußschem Strahlprofil erzeugen, da diese eine sehr geringe Divergenz aufweisen. Daher wird erfindungsgemäß besonders die Verwendung von Einzelmodus-Lasern (auch *single mode laser)* als Laserlichtquelle bevorzugt.

Als **"Laserstrahl"** wird der von einer einzelnen Laserlichtquelle emittierte elektromagnetische Strahl bezeichnet. Wird ein derartiger Laserstrahl (in diesem Fall auch als ursprünglicher Laserstrahl oder Ursprungslaserstrahl bezeichnet) durch ein optisches Element zur Strahlteilung geleitet, wird er in zwei oder mehrere **"Laserteilstrahlen"** geteilt, die, sofern die Aufteilung unter verlustfreien Bedingungen geschieht, zusammen die Energie des ursprünglichen Laserstrahls (des Ursprungslaserstrahls) besitzen.

Der Begriff **"Laserschneidstrahl",** wie hierin verwendet, bezeichnet einen Laserstrahl, der zum Schneiden (also zum Durchtrennen) von Elektrodenfolien und/oder Separatorenfolien mittels Laserenergie verwendet werden kann, d.h. einen Laserstrahl mit einer zum Laserschneiden der Elektrodenfolien und/oder Separatorenfolien ausreichende Leistungsdichte (in W/cm$^2$) am Bearbeitungsort oder einen Laserstrahl, der nach Überlagerung mit dem Lasererwärmungsstrahl ein überlagertes Leistungsdichteprofil oder kumuliertes Leistungsdichteprofil erzeugt, dass eine zum Laserschneiden der Elektrodenfolien und/oder Separatorenfolien ausreichende Leistungsdichte (in W/cm$^2$) am Bearbeitungsort aufweist.

Der Begriff **"Lasererwärmungsstrahl",** wie hierin verwendet, bezeichnet hingegen einen Laserstrahl, der nicht zum Schneiden (also zum Durchtrennen) von Elektrodenfolien und/oder Separatorenfolien mittels Laserenergie verwendet werden kann, da er hierfür eine zu geringe Leistungsdichte (in W/cm$^2$) aufweist. Die Leistungsdichte des Lasererwärmungsstrahls ist jedoch ausreichend, um die durch einen Laserschneidstrahl (beim Laserschneiden der Elektrodenfolien oder Separatorenfolien) verursachten Partikel einzuschmelzen oder zu verdampfen.

Wie noch im Weiteren erläutert werden wird, hängt die Leistungsdichte, die ausreichend zum Laserschneiden von Elektrodenfolien und/oder Separatorenfolien bzw. nicht ausreichend zum Laserschneiden von Elektrodenfolien und/oder Separatorenfolien aber ausreichend zum Einschmelzen bzw. Verdampfen von Partikeln ist, von vielen Parametern ab, unter anderem von den konkreten Materialeigenschaften des zu schneidenden Materials (wie z.B. Dicke und Zusammensetzung). Wie für einen Fachmann ersichtlich, ist eine absolute Definition der notwendigen bzw. ausreichenden Leistungsdichten daher an dieser Stelle nicht möglich, weil dabei das konkrete Material zu berücksichtigen ist. Es ist aber für einen Fachmann leicht, für ein gegebenes Material durch einfache Versuche zu ermitteln, ab welcher Leistungsdichte ein gegebener Laser zum Schneiden des Materials oder zum Verdampfen / Verschmelzen der Partikel geeignet ist.

Der Begriff **"Strahlprofil",** wie hierin verwendet, bedeutet das transversale Strahlprofil eines Laserstrahls, also die Intensitätsverteilung (oder die Verteilung der Leistungsdichte) senkrecht zur optischen Achse des Laserstrahls. Man kann in diesem Zusammenhang daher auch von dem Intensitätsprofil eines Laserstrahls oder von dem Leistungsdichteprofil eines Laserstrahls sprechen.

Ein **"Laserstrahl (oder Laserteilstrahl) mit Gaußschem Strahlprofil",** wie hierin verwendet, ist dadurch charakterisiert, dass sein transversales Intensitätsprofil (senkrecht zur optischen Achse) durch eine Gauß-Verteilung beschrieben wird. Demnach ist die Intensität des elektromagnetischen Feldes in der optischen Achse am Größten und nimmt mit dem Abstand zur optischen Achse gemäß der Gaußschen Glockenfunktion exponentiell ab. Zusätzlich ist ein "Laserstrahl (oder Laserteilstrahl) mit Gaußschem Strahlprofil" dadurch gekennzeichnet, dass er in axialer Richtung (d.h. in Richtung der optischen Achse) eine so genannte Strahltaille aufweist, d.h. einen Punkt an dem der Strahldurchmesser den Minimalwert annimmt, und der Strahldurchmesser mit zunehmendem Abstand von dieser Strahltaille größer wird. Man spricht in diesem Zusammenhang auch von der Strahldivergenz.

Bevorzugt ist, wenn die in der hierin offenbarten Vorrichtung verwendete Laserlichtquelle, eine Laserlichtquelle zur Bereitstellung eines Laserstrahls mit Gaußschem Strahlenprofil ist.

Ein Laserstrahl breitet sich nicht nur entlang der optischen Achse aus, sondern auch senkrecht hierzu, d.h. in transversaler Richtung. Die Intensität (bzw. die Leistungsdichte) des Laserstrahls ist hierbei jedoch in der optischen Achse am Größten und nimmt mit wachsendem transversalen Abstand zur optischen Achse exponentiell ab. Die **"op-**

tische Achse" ist bezogen auf das Strahlprofil eines Laserstrahls also der Punkt mit der höchsten Intensität (bzw. Leistungsdichte). Der **"Strahldurchmesser"** ($d_G$), wie in der vorliegenden Anmeldung verwendet, entspricht dem doppelten "Strahlradius" ($r_G$), welcher als der Abstand (r) zur optischen Achse (hier ist r = 0) des Laserstrahls (oder Laserteilstrahls) definiert ist, bei dem die Intensität (bzw. die Leistungsdichte) des Laserstrahls (oder Laserteilstrahls) auf $1/e^2$ der Maximalintensität (bzw. der maximalen Leistungsdichte) des Laserstrahls (oder Laserteilstrahls) abgefallen ist. Anders ausgedrückt entspricht der "Strahldurchmesser" ($d_G$) dem doppelten "Strahlradius" ($r_G$), welcher als der Abstand (r) zur optischen Achse (hier ist r = 0) des Laserstrahls (oder Laserteilstrahls) definiert ist, bei dem die Intensität (bzw. die Leistungsdichte) des Laserstrahls (oder Laserteilstrahls) auf 13,5% der Maximalintensität (bzw. der maximalen Leistungsdichte) des Laserstrahls (oder Laserteilstrahls) abgefallen ist. Der geringste mögliche Strahldurchmesser eines Laserstrahls (oder Laserteilstrahls) wird auch als **"Fokusdurchmesser"** bezeichnet. Damit weist die durch den Fokusdurchmesser definierte Fläche des Fokus zugleich die größtmögliche mittlere Energiedichte ($J/cm^2$) und mittlere Leistungsdichte ($W/cm^2$) eines Laserstrahls (oder Laserteilstrahls) auf.

Der Begriff **"Bearbeitungsort",** wie in der vorliegenden Anmeldung verwendet, bezeichnet den Punkt auf der Oberfläche der zu schneidenden Elektrodenfolie bzw. Separatorenfolie, auf den die überlagerten Laserschneid- und Lasererwärmungsstrahlen treffen und an dem die Bearbeitung (d.h. hier Erwärmen bzw. Schneiden) erfolgen soll. Es ist offensichtlich, dass sich dieser Bearbeitungsort im Verlaufe des Schneidens verändert und sich zumindest teilweise von der Oberfläche aus tiefer in die zu schneidende Elektrodenfolie bzw. Separatorenfolie verlagern kann.

Es sei an dieser Stelle darauf hingewiesen, dass Beschreibungen und Vergleiche von Leistungsdichten, Energiedichten, Strahldurchmessern, also generell von Parametern zur Charakterisierung von Strahlprofilen, sich auf den entsprechenden Parameter am Bearbeitungsort (wenn nichts anderes erwähnt ist) beziehen.

Folglich beschreibt der Begriff **"Strahldurchmesser am Bearbeitungsort",** wie in der vorliegenden Anmeldung verwendet, den Strahldurchmesser eines Laserstrahls oder Laserteilstrahls an dem Punkt auf der Oberfläche der zu schneidenden Elektrodenfolie bzw. Separatorenfolie, auf die der Laserstrahl oder Laserteilstrahl trifft. In Fällen, in denen der Laserstrahl auf den Bearbeitungsort fokussiert wird, entspricht der Strahldurchmesser am Bearbeitungsort zugleich dem Fokusdurchmesser. Der Strahldurchmesser (am Bearbeitungsort) des Ursprungslaserstrahls wird in der vorliegenden Anmeldung mit **d0,** der Strahldurchmesser (am Bearbeitungsort) des Laserschneidstrahls wird mit **d1** und der Strahldurchmesser (am Bearbeitungsort) des Lasererwärmungsstrahls wird mit **d2** bezeichnet.

Auch wenn erfindungsgemäß der Schneidstrahl mit dem Lasererwärmungsstrahl überlagert wird und in vielen Ausführungsformen, der Ursprungsstrahl durch ein optisches Element zur Strahlteilung aufgeteilt wird, so kann ein Fachmann dennoch und zudem experimentell leicht zu realisieren, die Strahldurchmesser von Ursprungslaserstrahl (d0), Laserschneidstrahl (d1) und Lasererwärmungsstrahl (d2) am Bearbeitungsort bestimmen (siehe unten).

Im Gegensatz zu dem Strahldurchmesser, beschreibt die **"Schnittbreite (ds)"** den beiderseitigen Abstand zur optischen Achse eine Laserstrahls (oder Laserteilstrahls oder kumulierten Leistungsdichteprofils), bei dem die Leistungsdichte des Laserstrahls (oder Laserteilstrahls oder kumulierten Leistungsdichteprofils) bis zu der Leistungsdichte abgefallen ist, die nicht mehr ausreichend ist, um die verwendete Elektrodenfolie oder Separatorenfolie zu schneiden. Die Schnittbreite des Ursprungslaserstrahls wird als **$ds_U$** und die Schnittbreite eines kumulierten Leistungsdichteprofils wird als **$ds_K$** bezeichnet bzw. abgekürzt. Wie noch im Weiteren erläutert werden wird, hängt die Leistungsdichte, die ausreichend zum Laserschneiden von Elektrodenfolien und/oder Separatorenfolien ist, von vielen Parametern ab, unter anderem von den konkreten Materialeigenschaften des zu schneidenden Materials (wie z.B. Dicke und Zusammensetzung). Wie für einen Fachmann ersichtlich, ist eine absolute Definition der notwendigen bzw. ausreichenden Leistungsdichten daher an dieser Stelle nicht möglich.

Der Begriff **"Energiedichte",** wie in der vorliegenden Anmeldung verwendet, beschreibt die Laserenergie (in Joule) die auf einer bestimmten Fläche (in $cm^2$) auftrifft. Die Energiedichte hat daher die Einheit $J/cm^2$.

Der Begriff **"Leistungsdichte",** wie in der vorliegenden Anmeldung verwendet, beschreibt die Laserleistung (P [in Watt]) die auf einer bestimmten Fläche (in $cm^2$) auftrifft. Die Leistungsdichte hat daher die Einheit $W/cm^2$. Die Begriffe "Leistungsdichte" und "Intensität" können in der vorliegenden Anmeldung synonym verwendet werden. Im Gegensatz zur Energiedichte berücksichtigt die Leistungsdichte bereits die Verweildauer des Lasers auf der bestimmten Fläche.

Folglich beschreibt der Begriff **"Leistungsdichte im Strahldurchmesser am Bearbeitungsort",** wie in der vorliegenden Anmeldung verwendet, die mittlere Laserleistung (in W), die auf der durch den Strahldurchmesser am Bearbeitungsort definierten Fläche (in $cm^2$) auftrifft. Der Einfachheit halber werden in der vorliegenden Anmeldung die Begriffe **"Leistungsdichte** im Strahldurchmesser am Bearbeitungsort" und **"Leistungsdichte** am Bearbeitungsort" gleichbedeutend verwendet. Der Begriff **"maximale Leistungsdichte im Strahldurchmesser am Bearbeitungsort"** bzw. "maximale Leistungsdichte am Bearbeitungsort" bezeichnet hingegen nicht die mittlere Laserleistung, sondern die höchste Laserleistung (in W), die auf der durch den Strahldurchmesser am Bearbeitungsort definierten Fläche (in $cm^2$) auftrifft. Dies ist in der Regel in der optischen Achse des betreffenden Laserstrahls erreicht.

Analog hierzu beschreibt der Begriff **"Energiedichte im Strahldurchmesser am Bearbeitungsort",** wie in der vorliegenden Anmeldung verwendet, die mittlere Laserenergie (in J), die auf der durch den Strahldurchmesser am Bearbeitungsort definierten Fläche (in cm$^2$) auftrifft. Der Einfachheit halber werden in der vorliegenden Anmeldung die Begriffe **"Energiedichte** im Strahldurchmesser am Bearbeitungsort" und **"Energiedichte** am Bearbeitungsort" gleichbedeutend verwendet. Der Begriff **"maximale Energiedichte im Strahldurchmesser am Bearbeitungsort"** bzw. "maximale Energiedichte am Bearbeitungsort" bezeichnet hingegen nicht die mittlere Laserenergie, sondern die höchste Laserenergie (in J), die auf der durch den Strahldurchmesser am Bearbeitungsort definierten Fläche (in cm$^2$) auftrifft. Dies ist in der Regel in der optischen Achse des betreffenden Laserstrahls erreicht.

Der Begriff **"Überlagerung",** wie hierin verwendet, bedeutet eine räumliche Überlagerung der Strahlprofile mehrerer Laserstrahlen oder Laserteilstrahlen, d.h. eine Überlagerung der Strahlprofile mehrerer Laserstrahlen oder Laserteilstrahlen an einem bestimmten Punkt (z.B. am Bearbeitungsort). Der Begriff **"Überlagerung",** wie hierin verwendet, soll jedoch keine konstruktive oder destruktive Interferenz mehrerer Laserstrahlen oder Laserteilstrahlen implizieren. Der Begriff **"Superposition"** wird folglich gleichbedeutend mit dem Begriff "Überlagerung" verwendet.

Der Begriff **"optisches Element zur Strahlteilung",** hierin synonym mit "Optik zur Strahlteilung" oder "Strahlteiler" verwendet, beschreibt ein optisches Element, das eingebracht in den Strahlengang eines Laserstrahls (auch als "ursprünglicher Laserstrahl" oder "Ursprungslaserstrahl" bezeichnet) dazu führt, dass dieser Laserstrahl in mindestens zwei Teilstrahlen (auch als Laserteilstrahlen bezeichnet) aufgeteilt wird. Mögliche optische Elemente zur Strahlteilung, die in der vorliegenden Erfindung verwendet werden können, umfassen bevorzugt physikalische Strahlteiler wie z.B. eine planparallele Platte, dielektrische Strahlteiler und Polarisationsstrahlteiler. Die genaue Position und vor allem der Winkel in dem ein Strahlteiler in einen Strahlengang eines Laserstrahls (des Ursprungslaserstrahls) eingebracht werden muss, hängt unter anderem von der konkreten Verwendung aber auch von dem Typ des Strahlteilers ab, gehört aber zum Wissen eines Fachmannes und wird daher an dieser Stelle nicht im Detail behandelt.

Der Begriff **"optisches Element zur Variation von Strahlprofilen",** hierin synonym mit "Optik zur Variation von Strahlprofilen" verwendet, umfasst optische Elemente, die in den Strahlengang eines Laserstrahls oder Laserteilstrahls eingebracht, zu einer Veränderung des Strahlprofils des betreffenden Laserstrahls oder Laserteilstrahls führen. Hierbei wird jedoch nicht der Typ des Strahlprofils verändert, d.h. ein Laserstrahl oder Laserteilstrahl mit Gaußschem Strahlprofil ist auch nach dem Durchgang durch das "optische Element zur Variation von Strahlprofilen" noch ein Laserstrahl oder Laserteilstrahl mit Gaußschem Strahlprofil. Bevorzugt handelt es sich erfindungsgemäß bei dem "optischen Element zur Variation von Strahlprofilen" um ein optisches Element zur Defokussierung eines Laserstrahls oder um ein optisches Element zur Aufweitung eines Laserstrahls.

Der Begriff **"optisches Element zur Defokussierung eines Laserstrahls",** hierin synonym mit "Optik zur Defokussierung eines Laserstrahls" verwendet, umfasst optische Elemente, die in den Strahlengang eines Laserstrahls oder Laserteilstrahls eingebracht, zu einer Defokussierung des betreffenden Laserstrahls oder Laserteilstrahls führen. Hierbei kann es sich erfindungsgemäß vorzugsweise um einfache Linsen, aber auch um Teleskop-Systeme aus mehreren hintereinander geschalteten Linsen handeln. Eine Variabilität in der Position des optischen Elementes zur Defokussierung eines Laserstrahls im Strahlengang des Laserstrahls bzw. Laserteilstrahls, z.B. eine Verschiebung einer einzelnen Linse oder eine Verschiebung der mehreren Linse eines Teleskop-Systems gegeneinander, ermöglicht hierbei eine Anpassung z.B. des Grades der Defokussierung an anwendungsbedingte Erfordernisse.

Der Begriff **"optisches Element zur Aufweitung eines Laserstrahls",** hierin synonym mit "Optik zur Aufweitung eines Laserstrahls" verwendet, umfasst optische Elemente, die in den Strahlengang eines Laserstrahls oder Laserteilstrahls eingebracht, zu einer Aufweitung des betreffenden Laserstrahls oder Laserteilstrahls führen. Hierbei kann es sich erfindungsgemäß vorzugsweise um einfache Linsen, aber auch um Teleskop-Systeme aus mehreren hintereinander geschalteten Linsen handeln. Eine Variabilität in der Position des optischen Elementes zur Aufweitung eines Laserstrahls im Strahlengang des Laserstrahls bzw. Laserteilstrahls, z.B. eine Verschiebung einer einzelnen Linse oder eine Verschiebung der mehreren Linse eines Teleskop-Systems gegeneinander, ermöglicht hierbei eine Anpassung z.B. des Grades der Aufweitung an anwendungsbedingte Erfordernisse.

Der Begriff **"optisches Element zur Strahlumlenkung",** wie hierin verwendet, umfasst optische Elemente, die in den Strahlengang eines Laserstrahls oder Laserteilstrahls eingebracht, zu einer Umlenkung oder Ablenkung eines Laserstrahls oder Laserteilstrahls führen, d.h. zu einer Änderung der Ausbreitungsrichtung des Laserstrahls oder Laserteilstrahls, vorzugsweise jedoch ohne hierbei die physikalischen Eigenschaften (z.B. Intensität, Strahlprofil) des Laserstrahls oder Laserteilstrahls zu verändern. Alternativ kann für den Begriff "optisches Element zur Strahlumlenkung" auch der Begriff "Spiegel" verwendet werden.

Der Begriff **"optisches Element zur Strahlüberlagerung",** hierin synonym mit "optisches Element zur Superposition von Laserstrahlen" oder "Optik zur Strahlüberlagerung" verwendet, beschreibt ein optisches Element, das eingebracht in den Strahlengang mehrerer Laserstrahlen bzw. Laserteilstrahlen dazu führt, dass diese Laserstrahlen bzw. Laserteilstrahlen überlagert (bzw. superponiert) werden. Man kann hier auch davon sprechen, dass das optische Element zur Strahlüberlagerung zu einer Überlagerung bzw. Superposition mehrerer Laserstrahlen bzw. Laserteilstrahlen führt.

Prinzipiell kann dieses optische Element zur Strahlüberlagerung ebenfalls ein Strahlteiler (siehe oben) sein, der jedoch spiegelverkehrt in den Strahlengang eingebaut wird, so dass er z.B. zwei einfallende Strahlen überlagert anstatt einen einfallenden Strahl in zwei Teilstrahlen aufzuteilen. Mögliche optische Elemente zur Strahlüberlagerung, die verwendet werden können, umfassen daher bevorzugt ebenfalls physikalische Strahlteiler wie z.B. eine planparallele Platte, dielektrische Strahlteiler, Polarisationsstrahlteiler, dichroitische Strahlteiler.

Die genaue Position und vor allem der Winkel in dem ein optisches Element zur Strahlüberlagerung bzw. ein als optisches Element zur Strahlüberlagerung fungierender Strahlteiler in die Strahlengänge der zu überlagernden Laserstrahlen oder Laserteilstrahlen eingebracht werden muss, hängt unter anderem von der konkreten Verwendung aber auch von dem Bautyp ab, gehört aber zum Wissen eines Fachmannes und wird daher an dieser Stelle nicht im Detail behandelt.

Bevorzugt ist, wenn die Elemente die in den Strahlengang eines Laserstrahls oder eines Laserteilstrahles der hierin offenbarten Vorrichtung eingebracht werden und zu einer Änderung der Ausbreitungsrichtung des betreffenden Laserstrahls oder Laserteilstrahls führen, d.h. die optischen Elemente zur Strahlteilung, zur Strahlumlenkung und zur Strahlüberlagerung, zu einer im Vergleich zum eintreffenden Laserstrahl oder Laserteilstrahl Strahlablenkung unter einem bestimmten Winkel führen. Dem Fachmann ist jedoch bewusst, dass auch andere Winkel bei der Strahlablenkung realisiert werden können, ohne dass von dem zugrundeliegenden Prinzip der vorliegenden Erfindung abgewichen wird.

Im Folgenden soll die hierin offenbarte Vorrichtung zum Laserschneiden exemplarisch erläutert werden.

In einer bevorzugten hierin offenbarten Vorrichtung sind die Laserlichtquelle (zur Bereitstellung eines Laserstrahls bzw. des Ursprungslaserstrahls), das optische Element zur Strahlteilung (für die Erzeugung des Laserschneidstrahls und des Lasererwärmungsstrahls) sowie das optische Element zur Strahlüberlagerung (zur Überlagerung des Laserschneidstrahls mit dem Lasererwärmungsstrahl) auf derselben optischen Ebene in Ausbreitungsrichtung des von der Laserlichtquelle bereitgestellten Laserstrahls (des Ursprungslaserstrahls) angeordnet (siehe **Fig. 2**). Bei Durchtritt des von der Laserlichtquelle bereitgestellten Ursprungslaserstrahls durch das optische Element zur Strahlteilung wird der Ursprungslaserstrahl (auch ursprünglicher Laserstrahl) in Laserschneidstrahl und Lasererwärmungsstrahl aufgeteilt und während der Laserschneidstrahl die Ausbreitungsrichtung des Ursprungslaserstrahls (auch ursprünglicher Laserstrahl)beibehält und somit in Richtung des optischen Elementes zur Strahlüberlagerung weitergeleitet wird, wird die Ausbreitungsrichtung des Lasererwärmungsstrahls geändert, vorzugsweise um 90° in Bezug zum Ursprungslaserstrahl (auch ursprünglicher Laserstrahl). Beim Durchtritt des Laserschneidstrahls durch das optische Element zur Strahlüberlagerung bleibt die Ausbreitungsrichtung des Laserschneidstrahls erneut unverändert, d.h. der Laserschneidstrahl trifft in Durchlassrichtung auf das optische Element zur Strahlüberlagerung auf. Im Strahlengang des Lasererwärmungsstrahls ist hingehen zumindest ein optisches Element zur Strahlumlenkung (z.B. Spiegel), bevorzugt jedoch zumindest zwei optische Elemente zur Strahlumlenkung, angeordnet, durch das/die der Lasererwärmungsstrahl derart umgelenkt wird, vorzugweise in zwei Stufen um beispielsweise 90°, so dass der Lasererwärmungsstrahl so auf das optische Element zur Strahlüberlagerung auftrifft, dass er von diesem in Ausbreitungsrichtung des Laserschneidstrahls umgelenkt wird und mit diesem überlagert wird. Danach werden der überlagerte Laserschneidstrahl und Lasererwärmungsstrahl vorzugsweise durch ein in deren nun gemeinsamen Strahlengang angeordnetes optisches Element zur Fokussierung geleitet und so auf den Bearbeitungsort fokussiert. Damit der Laserschneidstrahl, wie erfindungsgemäß gefordert, einen geringeren Strahldurchmesser (am Bearbeitungsort) aufweist als der Lasererwärmungsstrahl, werden vorzugsweise, wie bereits beschrieben, ein oder mehrere optische Elemente zur Variation von Strahlprofilen in der hierin offenbarten Vorrichtung eingesetzt.

Ein optisches Element kann zur Aufweitung eines Laserstrahls in den Strahlengang des Laserschneidstrahls zwischen dem optischen Element zur Strahlteilung und dem optischen Element zur Strahlüberlagerung angeordnet sein. Alternativ hierzu kann ein optisches Element zur Defokussierung eines Laserstrahls an beliebiger Position des Strahlengangs des Lasererwärmungsstrahls zwischen dem optischen Element zur Strahlteilung und dem optischen Element zur Strahlüberlagerung angeordnet sein. Zudem ist es möglich beiden Varianten zu kombinieren, so dass ein optisches Element zur Aufweitung eines Laserstrahls in den Strahlengang des Laserschneidstrahls zwischen dem optischen Element zur Strahlteilung und dem optischen Element zur Strahlüberlagerung angeordnet ist und zudem ein optisches Element zur Defokussierung eines Laserstrahls an beliebiger Position des Strahlengangs des Lasererwärmungsstrahls zwischen dem optischen Element zur Strahlteilung und dem optischen Element zur Strahlüberlagerung angeordnet ist.

Auch wenn erfindungsgemäß der Schneidstrahl mit dem Lasererwärmungsstrahl überlagert wird und der Ursprungsstrahl durch ein optisches Element zur Strahlteilung aufgeteilt wird, so kann ein Fachmann dennoch, wie bereits oben erwähnt, die Strahldurchmesser von Ursprungslaserstrahl (d0), Laserschneidstrahl (d1) und Lasererwärmungsstrahl (d2) am Bearbeitungsort bestimmen. Dies sei hier kurz beispielhaft ausgeführt:

Blockiert der Fachmann in der obigen hierin offenbarten Vorrichtung (z.B. durch eine Blende oder einen Schieber) den Strahlengang des Laserschneidstrahls, so kann er den (sonst nur theoretischen) Strahldurchmesser d2 am Bearbeitungsort des Lasererwärmungsstrahls bestimmen.

Blockiert der Fachmann in der obigen hierin offenbarten Vorrichtung (z.B. durch eine Blende oder einen Schieber) den Strahlengang des Lasererwärmungsstrahls, so kann er den (sonst nur theoretischen) Strahldurchmesser d1 des Laserschneidstrahls am Bearbeitungsort des Laserschneidstrahls bestimmen.

Entfernt der Fachmann in der obigen hierin offenbarten Vorrichtung das optische Element zur Strahlteilung aus dem Strahlengang (und falls vorhanden) ebenso ein optisches Element zur Defokussierung oder Aufweitung aus dem Strahlengang des nun ungeteilten Ursprungslaserstrahls, so kann der Fachmann den (sonst nur theoretischen) Strahldurchmesser d0 am Bearbeitungsort des Ursprungslaserstrahls bestimmen.

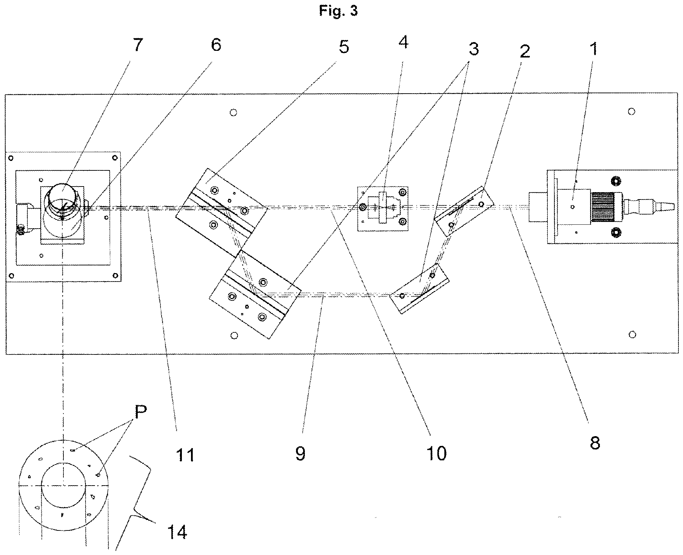

In einer weiteren bevorzugten hierin offenbarten Vorrichtung sind die Laserlichtquelle (zur Bereitstellung eines Laserstrahls bzw. des Ursprungslaserstrahls), das optische Element zur Strahlteilung (für die Erzeugung des Laserschneidstrahls und des Lasererwärmungsstrahls) sowie das optische Element zur Strahlüberlagerung (zur Überlagerung des Laserschneidstrahls mit dem Lasererwärmungsstrahl) auf derselben optischen Ebene in Ausbreitungsrichtung des von der Laserlichtquelle bereitgestellten Laserstrahls (des Ursprungslaserstrahls) angeordnet (siehe **Fig. 3**). Bei Durchtritt des von der Laserlichtquelle bereitgestellten Laserstrahls (des Ursprungslaserstrahls) durch das optische Element zur Strahlteilung wird der ursprüngliche Laserstrahl in Laserschneidstrahl und Lasererwärmungsstrahl aufgeteilt und während der Lasererwärmungsstrahl die Ausbreitungsrichtung des Ursprungslaserstrahls (auch ursprünglicher Laserstrahl) beibehält und somit in Richtung des optischen Elementes zur Strahlüberlagerung weitergeleitet wird, wird die Ausbreitungsrichtung des Laserschneidstrahls geändert, vorzugsweise um 90° in Bezug zum Ursprungslaserstrahl (auch ursprünglicher Laserstrahl). Beim Durchtritt des Lasererwärmungsstrahls durch das optische Element zur Strahlüberlagerung bleibt die Ausbreitungsrichtung des Lasererwärmungsstrahls erneut unverändert, d.h. der Lasererwärmungsstrahl trifft in Durchlassrichtung auf das optische Element zur Strahlüberlagerung auf. Im Strahlengang des Laserschneidstrahls ist hingehen zumindest ein optisches Element zur Strahlumlenkung (z.B. Spiegel), bevorzugt jedoch zumindest zwei optische Elemente zur Strahlumlenkung, angeordnet, durch das/die der Laserschneidstrahl derart umgelenkt wird, vorzugweise in zwei Stufen um jeweils 90°, so dass der Laserschneidstrahl so auf das optische Element zur Strahlüberlagerung auftrifft, dass er von diesem in Ausbreitungsrichtung des Lasererwärmungsstrahls umgelenkt wird und mit diesem überlagert wird. Danach werden der überlagerte Laserschneidstrahl und Lasererwärmungsstrahl vorzugsweise durch ein in deren nun gemeinsamem Strahlengang angeordnetes optisches Element zur Fokussierung geleitet und so auf den Bearbeitungsort fokussiert. Damit der Laserschneidstrahl, wie erfindungsgemäß gefordert, einen geringeren Strahldurchmesser (am Bearbeitungsort) aufweist als der Lasererwärmungsstrahl, werden vorzugsweise, wie bereits beschrieben, ein oder mehrere optische Elemente zur Variation von Strahlprofilen in der hierin offenbarten Vorrichtung eingesetzt. In dieser hierin offenbarten Vorrichtung kann ein optisches Element zur Defokussierung eines Laserstrahls in den Strahlengang des Lasererwärmungsstrahls zwischen dem optischen Element zur Strahlteilung und dem optischen Element zur Strahlüberlagerung angeordnet sein. Alternativ hierzu kann ein optisches Element zur Aufweitung eines Laserstrahls an beliebiger Position des Strahlengangs des Laserschneidstrahls zwischen dem optischen Element zur Strahlteilung und dem optischen Element zur Strahlüberlagerung angeordnet sein. Zudem ist es möglich beiden Varianten zu kombinieren, so dass ein optisches Element zur Defokussierung eines Laserstrahls in den Strahlengang des Lasererwärmungsstrahls zwischen dem optischen Element zur Strahlteilung und dem optischen Element zur Strahlüberlagerung angeordnet ist und zudem ein optisches Element zur Aufweitung eines Laserstrahls an beliebiger Position des Strahlengangs des Laserschneidstrahls zwischen dem optischen Element zur Strahlteilung und dem optischen Element zur Strahlüberlagerung angeordnet ist.

Es ist natürlich auch vorstellbar, dass nach der Strahlteilung des Ursprungslaserstrahls in den Laserschneidstrahl und den Lasererwärmungsstrahl nicht nur einer der beiden Teilstrahlen, also Laserschneidstrahl oder Lasererwärmungsstrahl, sondern beide Teilstrahlen, also Laserschneidstrahl und Lasererwärmungsstrahl, durch optische Elemente zur Strahlumlenkung in ihrem jeweiligen Strahlengang umgelenkt werden und z.B. der Laserschneidstrahl durch ein optisches Element zur Strahlaufweitung und weiter zum optischen Element zur Strahlüberlagerung geleitet wird, während der Lasererwärmungsstrahl zu einem optischen Element zur Defokussierung und anschließend zu demselben optischen Element zur Strahlüberlagerung (wie der Laserschneidstrahl) geleitet wird.

Die hierin offenbarte Vorrichtung zum Schneiden von Elektrodenfolien und/oder Separatorenfolien für elektrochemische Energiespeicher mittels eines Laserschneidstrahls, der mit einem Lasererwärmungsstrahl überlagert wird umfasst daher ebenso, eine Laserlichtquelle zur Bereitstellung eines Laserstrahls, ein optisches Element zur Strahlteilung für die Erzeugung des Laserschneidstrahls und des Lasererwärmungsstrahls,
zumindest ein optisches Element zur Strahlumlenkung des Laserschneidstrahls und des Weiteren zumindest ein optisches Element zur Strahlumlenkung des Lasererwärmungsstrahls,
ein optisches Element zur Aufweitung des Laserschneidstrahls und/oder ein optisches Element zur Defokussierung des Lasererwärmungsstrahls
und ein optisches Element zur Strahlüberlagerung von Laserschneidstrahl und Lasererwärmungsstrahl.

Es sei an dieser Stelle erneut betont, dass dem Fachmann mögliche Abwandlungen dieser Anordnung bzw. Führung der Strahlengänge in der hierin offenbarten Vorrichtung bekannt sind, z.B. unter Ausnutzung anderer Ablenkungswinkel und unter Verwendung von zusätzlichen Spiegeln, die jedoch demselben Konzept zugrunde liegen.

Zudem sei an dieser Stelle auf einen wichtigen Aspekt zum Verständnis hingewiesen: Das optische Element zur Strahlteilung der hierin offenbarten Vorrichtung befindet sich im Strahlengang des Ursprungslaserstrahls (auch ursprünglicher Laserstrahl) und ist der Ausgangspunkt der Strahlengänge des Laserschneidstrahls und des Lasererwärmungsstrahls. Das optische Element zur Strahlenüberlagerung ist derart in der hierin offenbarten Vorrichtung angeordnet, dass es sich sowohl im Strahlengang des Laserschneidstrahls, als auch im Strahlengang des Lasererwärmungsstrahls befindet. Wird jedoch in der vorliegenden Anmeldung davon gesprochen, dass ein optisches Element zur Variation von Strahlprofilen, also ein optisches Element zur Defokussierung oder ein optisches Element zur Aufweitung, sich im Strahlengang des Laserschneidstrahls befindet, so ist dies so zu verstehen, dass sich das besagte optische Element nur im Strahlengang des Laserschneidstrahls und folglich nicht im Strahlengang des Lasererwärmungsstrahls befindet. Analog hierzu gilt, dass wenn in der in der vorliegenden Anmeldung davon gesprochen wird, dass ein optisches Element zur Variation von Strahlprofilen, also ein optisches Element zur Defokussierung oder ein optisches Element zur Aufweitung, sich im Strahlengang des Lasererwärmungsstrahls befindet, so ist dies so zu verstehen, dass sich das besagte optische Element nur im Strahlengang des Lasererwärmungsstrahls und folglich nicht im Strahlengang des Laserschneidstrahls befindet.

## Verfahren zum Laserschneiden

Laserstrahlen aus dem Stand der Technik mit hoher Energiedichte oder hoher Leistungsdichte, welche zum Schneiden von Elektrodenfolien geeignet sind, erzeugen zwangsweise Partikel, welche sich auf den Elektrodenfolien vor allem entlang des Laserschnitts ablagern und je nach Größe und Art der Ablagerung die Elektrodenfolie unbrauchbar machen können. Die Partikelbildung konnte auch bei Reduzierung der Energiedichte oder der Leistungsdichte des Laserstrahls am Bearbeitungsort nicht bis zu einem akzeptablen Maß gesenkt werden. Es musste somit ein Verfahren entwickelt werden, welches die beim Laserschneiden unvermeidbar entstehenden Partikel bzw. deren Ablagerung auf der zu schneidenden Elektrodenfolie bekämpft. Dies erfolgt erfindungsgemäß durch einen Lasererwärmungsstrahl oder durch einen durch Strahlteilung erzeugten Lasererwärmungsstrahl, welcher dort, wo die Partikel entstehen bzw. sich ablagern, nämlich vorrangig bis ausschließlich in den Randbereichen um den Laserschnitt herum, die Partikelbildung durch Abschwächung des Temperaturgradienten im zu schneidenden Material reduziert und/oder die entstandenen Partikel verdampft oder wieder mit der Elektrodenfolie verschmelzt.

Die Aufgabe der vorliegenden Erfindung wird daher durch ein Verfahren zum Laserschneiden von Elektrodenfolien und/oder Separatorenfolien für elektrochemische Energiespeicher gelöst, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in $W/cm^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat.

Es hat sich überraschend herausgestellt, dass eine derartige Partikelbildung während des Laserschneidens von Elektrodenfolien und/oder Separatorenfolien durch das erfindungsgemäße Verfahren zum Laserschneiden vermieden werden kann.

Bei dem erfindungsgemäßen Verfahren zum Laserschneiden wird im Gegensatz zum Stand der Technik die Wärmeeinflusszone um die eigentliche Schnittkante herum ausgedehnt. Hierzu wird in einer bevorzugten Ausführungsform der Erfindung ein Laserschneidstrahl, der eine für das Laserschneiden von Elektrodenfolien und/oder Separatorenfolien ausreichende Leistungsdichte, d.h. ausreichende Leistungsdichte am Bearbeitungsort aufweist und somit allein auch zu der oben angesprochenen Partikelbildung führen würde, mit einem Lasererwärmungsstrahl überlagert, wobei der Strahldurchmesser des Laserschneidstrahls am Bearbeitungsort geringer ist als der Strahldurchmesser des Lasererwärmungsstrahls. Der besagte Lasererwärmungsstrahl hat im Gegensatz zum Laserschneidstrahl keine ausreichende Leistungsdichte, d.h. keine ausreichende Leistungsdichte am Bearbeitungsort um Elektrodenfolien und/oder Separatorenfolien zu schneiden. Die Leistungsdichte des Lasererwärmungsstrahls und bevorzugt die Leistungsdichte des Lasererwärmungsstrahls in den Randbereichen des Laserschnitts ist jedoch ausreichend zur Verschmelzung bzw. Verdampfung der durch das Schneiden mittels Laserschneidstrahl erzeugten Partikel. Durch die Überlagerung des Laserschneidstrahls mit dem Lasererwärmungsstrahl konnte eine Vermeidung bzw. deutliche Reduzierung der Partikelbildung während des Laserschneidens von Elektrodenfolien und/oder Separatorenfolien erreicht werden.

Eine weitere Ausführungsform der vorliegenden Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in $W/cm^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat und wobei der Laserschneidstrahl eine höhere maximale Leistungsdichte als der Lasererwärmungsstrahl hat.

Für die erfolgreiche Ausführung der Erfindung ist es natürlich von Bedeutung, dass die erfindungsgemäß geforderten Eigenschaften sowohl des Laserschneidstrahls als auch des Lasererwärmungsstrahls an dem Punkt vorhanden sind, an dem auch das Schneiden bzw. die Bearbeitung der Elektroden- und/oder Separatorenfolien, also am Bearbeitungsort (siehe unten).

Die vorliegende Erfindung ist daher ebenfalls gerichtet auf ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte am Bearbeitungsort (in W/cm$^2$) besitzt oder nach Überlagerung mit dem Lasererwärmungsstrahl eine zum Laserschneiden der Elektrodenfolien und/oder Separatorenfolien ausreichende Leistungsdichte am Bearbeitungsort erzeugt wird und der Lasererwärmungsstrahl eine zum Laserschneiden der Elektrodenfolien und/oder Separatorenfolien nicht ausreichende Leistungsdichte am Bearbeitungsort aber eine zur Verschmelzung und/oder Verdampfung von beim Laserschneiden entstehenden Partikeln ausreichende Leistungsdichte am Bearbeitungsort aufweist und der Lasererwärmungsstrahl einen größeren Strahldurchmesser am Bearbeitungsort als der Laserschneidstrahl hat.

In einer bevorzugten Ausführungsform der vorliegenden Erfindung hat der Laserschneidstrahl bereits eine zum Laserschneiden der Elektrodenfolien und/oder Separatorenfolien ausreichende Leistungsdichte (am Bearbeitungsort) und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort).

In einer Ausführungsform der vorliegenden Erfindung hat der erfindungsgemäße Laserschneidstrahl also bereits für sich genommen (am Bearbeitungsort) eine ausreichende Leistungsdichte zum Schneiden der zu schneidenden Elektroden- und/oder Separatorenfolie. Dieser Laserschneidstrahl führt also allein nicht nur zu einem Schnitt sondern ebenfalls zur Partikelbildung. Durch eine Überlagerung dieses Laserschneidstrahls mit dem erfindungsgemäßen Lasererwärmungsstrahl, der keine zum Laserschneiden der Elektrodenfolien und/oder Separatorenfolien ausreichende Leistungsdichte besitzt aber eine zum Verschmelzen und/oder Verdampfen der vom Laserschneidstrahl gebildeten Partikel ausreichende Leistungsdichte aufweist und einen größeren Strahldurchmesser als der Laserschneidstrahl hat, wird die Partikelbildung am Bearbeitungsort deutlich reduziert bis verhindert. Die vorliegende Erfindung betrifft daher ebenfalls ein Verfahren zur Vermeidung von Partikelbildung beim Laserschneiden von Elektrodenfolien und/oder Separatorenfolien.

Die vorliegende Erfindung betrifft somit ebenfalls ein Verfahren zur Vermeidung von Partikelbildung beim Laserschneiden von Elektrodenfolien und/oder Separatorenfolien für elektrochemische Energiespeicher, wobei ein zum Laserschneiden eingesetzter partikelverursachender Laserschneidstrahl mit einer Leistungsdichte ausreichend zum Laserschneiden der Elektrodenfolien und/oder Separatorenfolien mit einem Lasererwärmungsstrahl überlagert wird, der keine zum Laserschneiden der Elektrodenfolien und/oder Separatorenfolien ausreichende Leistungsdichte besitzt aber eine zum Verschmelzen und/oder Verdampfen der vom Laserschneidstrahl gebildeten Partikel ausreichende Leistungsdichte aufweist und einen größeren Strahldurchmesser als der Laserschneidstrahl hat.

Die vorliegende Erfindung betrifft somit ebenfalls ein Verfahren zur Vermeidung von Partikelbildung beim Laserschneiden von Elektrodenfolien und/oder Separatorenfolien für elektrochemische Energiespeicher, wobei ein zum Laserschneiden eingesetzter partikelverursachender Laserschneidstrahl mit einer Leistungsdichte am Bearbeitungsort ausreichend zum Laserschneiden der Elektrodenfolien und/oder Separatorenfolien mit einem Lasererwärmungsstrahl überlagert wird, der keine zum Laserschneiden der Elektrodenfolien und/oder Separatorenfolien ausreichende Leistungsdichte am Bearbeitungsort besitzt aber eine zum Verschmelzen und/oder Verdampfen der vom Laserschneidstrahl gebildeten Partikel ausreichende Leistungsdichte am Bearbeitungsort aufweist und einen größeren Strahldurchmesser am Bearbeitungsort als der Laserschneidstrahl hat.

Die vorliegende Erfindung betrifft somit ebenfalls ein Verfahren zur Vermeidung von Partikelbildung beim Laserschneiden von Elektrodenfolien und/oder Separatorenfolien für elektrochemische Energiespeicher, wobei ein zum Laserschneiden eingesetzter Laserschneidstrahl mit einer Leistungsdichte ausreichend zum Laserschneiden der Elektrodenfolien und/oder Separatorenfolien mit einem Lasererwärmungsstrahl überlagert wird, der keine zum Laserschneiden der Elektrodenfolien und/oder Separatorenfolien ausreichende Leistungsdichte besitzt aber eine zum Verschmelzen und/oder Verdampfen von vom Laserschneidstrahl gebildeten Partikel ausreichende Leistungsdichte aufweist und einen größeren Strahldurchmesser als der Laserschneidstrahl hat.

Die vorliegende Erfindung betrifft somit ebenfalls ein Verfahren zur Vermeidung von Partikelbildung beim Laserschneiden von Elektrodenfolien und/oder Separatorenfolien für elektrochemische Energiespeicher, wobei ein zum Laserschneiden eingesetzter Laserschneidstrahl mit einer Leistungsdichte am Bearbeitungsort ausreichend zum Laserschneiden der Elektrodenfolien und/oder Separatorenfolien mit einem Lasererwärmungsstrahl überlagert wird, der keine zum Laserschneiden der Elektrodenfolien und/oder Separatorenfolien ausreichende Leistungsdichte am Bearbeitungsort besitzt aber eine zum Verschmelzen und/oder Verdampfen von vom Laserschneidstrahl gebildeten Partikel ausreichende Leistungsdichte am Bearbeitungsort aufweist und einen größeren Strahldurchmesser am Bearbeitungsort als der Laserschneidstrahl hat.

Bei dem erfindungsgemäßen Verfahren zum Laserschneiden wird für das Schneiden ein Laserschneidstrahl verwendet, der mit einem Lasererwärmungsstrahl überlagert bzw. superponiert wird. Durch diese Überlagerung (oder Superposition) von Laserschneidstrahl und Lasererwärmungsstrahl soll die Wärmeeinflusszone um die erzeugte Schnittkante (bzw. Schnittpunkt) vergrößert werden. Diese im Vergleich zum Stand der Technik erfolgte Ausdehnung der Wärmeeinflusszone um die eigentliche Schnittkante hat erstaunlicherweise zu einer deutlichen Reduzierung der Partikelbildung beim Schneiden geführt. Wie bereits beschrieben hat hierzu der Lasererwärmungsstrahl einen größeren Strahldurchmesser (am Bearbeitungsort) als der Laserschneidstrahl und vorzugsweise zugleich eine geringere Leistungsdichte (am Bearbeitungsort) als der Laserschneidstrahl. Hierbei hat erfindungsgemäß der Laserschneidstrahl bereits eine ausreichende Leistungsdichte (am Bearbeitungsort), um die verwendete Elektrodenfolie oder Separatorenfolie zu schneiden, oder es wird nach Überlagerung mit dem Lasererwärmungsstrahl eine zum Laserschneiden der Elektrodenfolien und/oder Separatorenfolien ausreichende Leistungsdichte erzeugt. Der Lasererwärmungsstrahl hingegen hat erfindungsgemäß keine ausreichende Leistungsdichte (am Bearbeitungsort), um die verwendete Elektrodenfolie oder Separatorenfolie zu schneiden, jedoch eine ausreichende Leistungsdichte (am Bearbeitungsort), um die durch den Laserschneidstrahl verursachten Partikel einzuschmelzen bzw. zu verdampfen.

Aufgrund der Vielfalt der möglichen zu schneidenden Elektroden- bzw. Separatorenfolien hinsichtlich Material, Aufbau und Dicke (siehe unten), ist es für einen Fachmann offensichtlich, dass die genauen Parameter für den Laserschneidstrahl und den Lasererwärmungsstrahl (z.B. Leistungsdichte, Strahldurchmesser am Bearbeitungsort) sowie deren Verhältnis zueinander massiv von der jeweiligen konkreten Anwendung abhängen und somit für jede Anwendung empirisch bestimmt werden müssen.

Es ist jedoch erfindungsgemäß bevorzugt, wenn die maximale Leistungsdichte (am Bearbeitungsort) des Lasererwärmungsstrahls höchstens 55%, bevorzugt höchstens 50%, bevorzugt höchstens 40%, weiter bevorzugt höchstens 35%, weiter bevorzugt höchstens 30% der maximalen Leistungsdichte (am Bearbeitungsort) des Laserschneidstrahls beträgt.

Die vorliegende Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in $W/cm^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort) als der Laserschneidstrahl hat, wobei die maximale Leistungsdichte (am Bearbeitungsort) des Lasererwärmungsstrahls im Bereich zwischen 30% bis 60% der maximalen Leistungsdichte (am Bearbeitungsort) des Laserschneidstrahls liegt.

Die vorliegende Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in $W/cm^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort) als der Laserschneidstrahl hat, wobei die maximale Leistungsdichte (am Bearbeitungsort) des Lasererwärmungsstrahls höchstens 55%, bevorzugt höchstens 50%, bevorzugt höchstens 40%, weiter bevorzugt höchstens 35%, weiter bevorzugt höchstens 30% der maximalen Leistungsdichte (am Bearbeitungsort) des Laserschneidstrahls beträgt.

Es ist ebenso erfindungsgemäß bevorzugt, wenn die maximale Leistungsdichte (am Bearbeitungsort) des Lasererwärmungsstrahls zwischen 10% und 60%, bevorzugter zwischen 10% und 55%, bevorzugt zwischen 15% und 50%, weiter bevorzugt zwischen 20% und 40%, bevorzugt zwischen 30% und 60% weiter bevorzugt zwischen 25% und 30% der maximalen Leistungsdichte (am Bearbeitungsort) des Laserschneidstrahls beträgt.

Die vorliegende Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in $W/cm^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort) als der Laserschneidstrahl hat, wobei die maximale Leistungsdichte (am Bearbeitungsort) des Lasererwärmungsstrahls zwischen 10% und 60%, bevorzugter zwischen 10% und 55%, bevorzugt zwischen 15% und 50%, weiter bevorzugt zwischen 20% und 40%, bevorzugt zwischen 30% und 60% weiter bevorzugt zwischen 25% und 30% der maximalen Leistungsdichte (am Bearbeitungsort) des Laserschneidstrahls beträgt.

Weiterhin ist erfindungsgemäß bevorzugt, dass der Strahldurchmesser d2 (am Bearbeitungsort) des Lasererwärmungsstrahls im Bereich 110% und 300%, weiter bevorzugt zwischen 110% und 200%, ebenfalls bevorzugt zwischen 200% und 300%, weiter bevorzugt zwischen 120% und 180%, weiter bevorzugt zwischen 130% und 150% des Strahldurchmesser d1 (am Bearbeitungsort) des Laserschneidstrahls liegt.

Anders ausgedrückt ist erfindungsgemäß bevorzugt, dass d2 = 1,1 x d1 - 3,0 x d1, weiter bevorzugt d2 = 1,1 x d1 - 2,0 x d1, ebenfalls bevorzugt d2 = 2,0 x d1 - 3,0 x d1, weiter bevorzugt d2 = 1,2 x d1 - 1,8 x d1, weiter bevorzugt d2 = 1,3 x d1 - 1,5 x d1 ist.

Die vorliegende Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort) als der Laserschneidstrahl hat, wobei der Strahldurchmesser d2 (am Bearbeitungsort) des Lasererwärmungsstrahls im Bereich zwischen 110% und 200%, weiter bevorzugt zwischen 120% und 180%, weiter bevorzugt zwischen 130% und 150% des Strahldurchmesser d1 (am Bearbeitungsort) des Laserschneidstrahls liegt.

Die vorliegende Erfindung betrifft ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Strahldurchmesser d2 (am Bearbeitungsort) des Lasererwärmungsstrahls größer ist als der Strahldurchmesser d1 (am Bearbeitungsort) des Laserschneidstrahls, wobei d2 = 1,1 x d1 - 3,0 x d1, weiter bevorzugt d2 = 1,1 x d1 - 2,0 x d1, ebenfalls bevorzugt d2 = 2,0 x d1 - 3,0 x d1, weiter bevorzugt d2 = 1,2 x d1 - 1,8 x d1, weiter bevorzugt d2 = 1,3 x d1 - 1,5 x d1 ist.

Weiterhin ist erfindungsgemäß bevorzugt, dass der Strahldurchmesser d1 (am Bearbeitungsort) des Laserschneidstrahls im Bereich zwischen 10μm und 100μm weiter bevorzugt zwischen 20μm und 90μm, weiter bevorzugt zwischen 40μm und 80μm und noch weiter bevorzugt zwischen 50μm und 70μm liegt.

Besonders bevorzugt ist erfindungsgemäß, wenn die maximale Leistungsdichte (am Bearbeitungsort) des Lasererwärmungsstrahls höchstens 55%, bevorzugt höchstens 50%, bevorzugt höchstens 40%, weiter bevorzugt höchstens 35%, weiter bevorzugt höchstens 30% der maximalen Leistungsdichte (am Bearbeitungsort) des Laserschneidstrahls beträgt und der Strahldurchmesser d2 (am Bearbeitungsort) des Lasererwärmungsstrahls im Bereich zwischen 110% und 300%, weiter bevorzugt zwischen 110% und 200%, ebenfalls bevorzugt zwischen 200% und 300%, weiter bevorzugt zwischen 120% und 180%, weiter bevorzugt zwischen 130% und 150% des Strahldurchmesser d1 (am Bearbeitungsort) des Laserschneidstrahls liegt.

Die vorliegende Erfindung betrifft also ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort)

als der Laserschneidstrahl hat, wobei die maximale Leistungsdichte (am Bearbeitungsort) des Lasererwärmungsstrahls höchstens 55%, bevorzugt höchstens 50%, bevorzugt höchstens 40%, weiter bevorzugt höchstens 35%, weiter bevorzugt höchstens 30% der maximalen Leistungsdichte (am Bearbeitungsort) des Laserschneidstrahls beträgt und der Strahldurchmesser d2 (am Bearbeitungsort) des Lasererwärmungsstrahls im Bereich zwischen 110% und 300%, weiter bevorzugt zwischen 110% und 200%, ebenfalls bevorzugt zwischen 200% und 300%, weiter bevorzugt zwischen 120% und 180%, weiter bevorzugt zwischen 130% und 150% des Strahldurchmesser d1 (am Bearbeitungsort) des Laserschneidstrahls liegt.

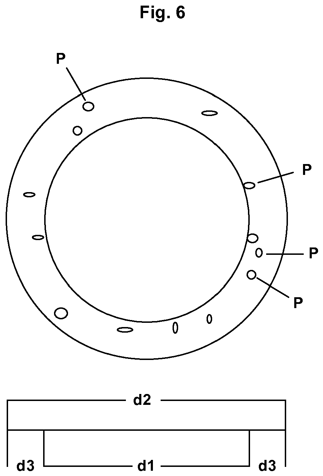

Wie bereits beschrieben, wird durch die erfindungsgemäße Überlagerung des Laserschneidstrahls mit dem Lasererwärmungsstrahl die Wärmeeinflusszone um den eigentlichen Schnittpunkt bzw. der eigentlichen Schnittkante ausgedehnt, was überraschenderweise zur Vermeidung der Partikelbildung beim Laserschneiden von Elektroden- und/oder Separatorenfolien geführt hat. Um dies zumindest relativ charakterisieren zu können, bietet sich die Definition einer so genannten **"Randzone"** an. Der Begriff **"Randzone"** (auch als **d3** bezeichnet), wie hierin verwendet, ist definiert als der Bereich des Laserschneidstrahls oder des Lasererwärmungsstrahls (am Bearbeitungsort), der zwischen dem Strahldurchmesser d2 (am Bearbeitungsort) des Lasererwärmungsstrahls und dem Strahldurchmesser d1 (am Bearbeitungsort) des Laserschneidstrahls liegt **(siehe Fig. 6, gemeint ist der Bereich d3 = d2 - d1).** Dieser Bereich, als die Randzone wird auch als d3 bezeichnet, wobei d3=d2 - d1. Diese Definition ist natürlich nur am Bearbeitungsort und damit nach erfolgter Überlagerung von Laserschneidstrahl und Lasererwärmungsstrahl gültig. Auf den Laserschneidstrahl bezogen ist also die Randzone der Abschnitt des Strahlprofils des Laserschneidstrahls, der außerhalb des Strahldurchmessers d1 (am Bearbeitungsort) des Laserschneidstrahls beginnt und bis zum Strahldurchmesser d2 (am Bearbeitungsort) des Lasererwärmungsstrahls reicht. Die Randzone ist also innerhalb des Strahldurchmessers d1 (am Bearbeitungsort) des Lasererwärmungsstrahls und außerhalb des Strahldurchmessers d2 (am Bearbeitungsort) des Laserschneidstrahls.

Die vorliegende Erfindung betrifft also ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Lasererwärmungsstrahl einen größeren Strahldurchmesser (am Bearbeitungsort) als der Laserschneidstrahl hat, wobei in der Randzone, definiert als der Bereich zwischen dem Strahldurchmesser des Lasererwärmungsstrahls und dem Strahldurchmesser des Laserschneidstrahls, die mittlere Leistungsdichte des Lasererwärmungsstrahls größer als die mittlere Leistungsdichte des Laserschneidstrahls ist.

Die vorliegende Erfindung betrifft also ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (am Bearbeitungsort) (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte (am Bearbeitungsort) aber eine zur Verschmelzung und/oder Verdampfung von beim Laserschneiden entstehenden Partikeln ausreichende Leistungsdichte (am Bearbeitungsort) aufweist und der Strahldurchmesser d2 (am Bearbeitungsort) des Lasererwärmungsstrahls größer als der Strahldurchmesser d1 (am Bearbeitungsort) als der Laserschneidstrahls ist, wobei in dem Bereich d2 - d1 (also d3), definiert als der Bereich zwischen dem Strahldurchmesser d2 (am Bearbeitungsort) des Lasererwärmungsstrahls und dem Strahldurchmesser d1 (am Bearbeitungsort) des Laserschneidstrahls die mittlere Leistungsdichte des Lasererwärmungsstrahls größer als die mittlere Leistungsdichte des Laserschneidstrahls ist.

Besonders bevorzugt ist erfindungsgemäß, wenn in der Randzone (also im Bereich d3) die mittlere Leistungsdichte des Lasererwärmungsstrahls 130%, bevorzugt 150%, bevorzugt 180%, weiter bevorzugt höchstens 200%, weiter bevorzugt 250% der mittleren Leistungsdichte des Laserschneidstrahls beträgt.

Des Weiteren ist ein erfindungsgemäßes Verfahren zum Laserschneiden von Elektrodenfolien und/oder Separatorenfolien für elektrochemische Energiespeicher bevorzugt, wobei die Leistungsdichte (am Bearbeitungsort) des Lasererwärmungsstrahls mindestens **10$^5$ W/cm$^2$**, aber nicht mehr als **10$^6$ W/cm**-beträgt.

Des Weiteren ist ein erfindungsgemäßes Verfahren zum Laserschneiden von Elektrodenfolien und/oder Separatorenfolien für elektrochemische Energiespeicher bevorzugt, wobei die maximale Leistungsdichte (am Bearbeitungsort) des Laserschneidstrahles mindestens **2 MW/cm** im kontinuierlichen Betrieb und im Impulsbetrieb je nach Impulsdauer mindestens **10 MW/cm$^2$** beträgt.

In einer besonders bevorzugten Ausführungsform ist das erfindungemäße Verfahren zum Laserschneiden von Elektrodenfolien und/oder Separatorenfolien für elektrochemische Energiespeicher dadurch gekennzeichnet, dass die Laserstrahlen oder Laserteilstrahlen ein Gaußsches Strahlprofil aufweisen, d.h. sowohl der Laserschneidstrahl als auch der Lasererwärmungsstrahl weisen bevorzugt ein Gaußsches Strahlprofil auf.

Es existieren zwei grundlegende Möglichkeiten zur Erzeugung des erfindungsgemäßen Laserschneidstrahls und des Lasererwärmungsstrahls, die in den folgenden Abschnitten im Detail beschrieben werden.

Es ist möglich lediglich **eine Laserlichtquelle** zu verwenden und den von ihr emittierten Laserstrahl, den hierin so genannten ursprünglichen Laserstrahl (auch als Ursprungsstrahl bezeichnet), durch ein im Strahlengang des ursprünglichen Laserstrahls befindliches optisches Element zur Strahlteilung (auch als Strahlteiler bezeichnet) in **zwei Laserteilstrahlen** aufzuteilen. Bei dem ersten Laserteilstrahl handelt es sich per Definition um den Laserschneidstrahl, während es sich bei dem zweiten Laserteilstrahl per Definition um den Lasererwärmungsstrahl handelt.

Nach der Teilung des ursprünglichen Laserstrahls in den Laserschneidstrahl und den Lasererwärmungsstrahl haben diese, wie für einen Fachmann ersichtlich, zunächst identische Strahldurchmesser. Damit nun der erfindungsgemäße Lasererwärmungsstrahl einen größeren Strahldurchmesser (am Bearbeitungsort) als der erfindungsgemäße Laserschneidstrahl hat, muss das Strahlprofil zumindest eines der beiden Laserteilstrahlen so verändert werden, dass beide Laserteilstrahlen, also Laserschneidstrahl und Lasererwärmungsstrahl, am Bearbeitungsort unterschiedliche Strahldurchmesser aufweisen. Nach der Aufteilung des ursprünglichen Laserstrahls in die beiden Laserteilstrahlen, kann folglich einer oder sogar beide Laserteilstrahlen unabhängig voneinander durch optische Elemente im Strahlengang des jeweiligen Laserteilstrahls in ihrem Strahlprofil verändert (bzw. variiert) werden, so dass der erste Laserteilstrahl (der Laserschneidstrahl) einen geringeren Strahldurchmesser am Bearbeitungsort als der zweite Laserteilstrahl (der Lasererwärmungsstrahl) aufweist und vorzugsweise zugleich der erste Laserteilstrahl (der Laserschneidstrahl) eine höhere Leistungsdichte (in W/cm$^2$) im Strahldurchmesser am Bearbeitungsort als der zweite Laserteilstrahl (der Lasererwärmungsstrahl) aufweist. Anschließend werden die beiden Laserteilstrahlen über eine Optik zur Strahlüberlagerung (auch als optisches Element zur Strahlüberlagerung bezeichnet) überlagert. Nach der Überlagerung werden die beiden nun überlagerten Laserteilstrahlen, also Laserschneidstrahl und Lasererwärmungsstrahl, durch ein optisches Element zur Fokussierung (z.B. eine Linse) geleitet, welches sich natürlich im nun gemeinsamen Strahlengang von Laserschneidstrahl und Lasererwärmungsstrahl befindet, und so auf den Bearbeitungsort fokussiert.

Besonders bevorzugt ist gemäß der vorliegenden Erfindung, wenn sowohl die Teilung des ursprünglichen Laserstrahls in zwei Laserteilstrahlen als auch deren spätere Zusammenführung ohne Verlust von Energie erfolgt.

Bei der Superposition (bzw. Überlagerung) von den beiden Laserteilstrahlen, nämlich dem Laserschneidstrahl und dem Lasererwärmungsstrahl, ist besonders bevorzugt, dass am Bearbeitungsort die optische Achse des ersten Laserteilstrahls (des Laserschneidstrahls), welcher einen geringeren Strahldurchmesser am Bearbeitungsort und bevorzugt auch eine höhere Leistungsdichte am Bearbeitungsort als der zweite Laserteilstrahl (der Lasererwärmungsstrahl) aufweist, innerhalb der Fläche liegt, die durch den Strahldurchmesser des zweiten Laserteilstrahls (des Lasererwärmungsstrahls) am Bearbeitungsort definiert ist. Noch mehr bevorzugt ist, wenn am Bearbeitungsort die durch den Strahldurchmesser des ersten Laserteilstrahls (des Laserschneidstrahls) definierte Fläche vollständig innerhalb der Fläche liegt, die durch den Strahldurchmesser des zweiten Laserteilstrahls (des Lasererwärmungsstrahls) am Bearbeitungsort definiert ist. Noch mehr bevorzugt ist jedoch, wenn am Bearbeitungsort die optische Achse des ersten Laserteilstrahls (des Laserschneidstrahls) an demselben Punkt am Bearbeitungsort liegt wie die optische Achse des zweiten Laserteilstrahls (des Lasererwärmungsstrahls), d.h. wenn also die optischen Achsen beider Laserteilstrahlen, also von Laserschneidstrahl und Lasererwärmungsstrahl, am Bearbeitungsort deckungsgleich sind. Anders ausgedrückt ist es erfindungsgemäß besonders bevorzugt, wenn der erste Laserteilstrahl (der Laserschneidstrahl) und der zweite Laserteilstrahl (der Lasererwärmungsstrahl) derart superponiert bzw. überlagert werden, dass die beiden Laserteilstrahlen, also Laserschneidstrahl und Lasererwärmungsstrahl, am Bearbeitungsort konzentrisch angeordnet sind.

Die bereits erwähnte Änderung bzw. Variation des Strahlprofils eines oder sogar beider Laserteilstrahlen, also des Laserschneidstrahls und/oder des Lasererwärmungsstrahls, so dass die beiden Laserteilstrahlen unterschiedliche Strahldurchmesser am Bearbeitungsort und vorzugsweise auch unterschiedliche Leistungsdichten am Bearbeitungsort aufweisen, erfolgt durch optische Elemente zur Variation von Strahlprofilen (auch als Optik zur Variation von Strahlprofilen) im Strahlengang eines oder beider Laserteilstrahlen. Hierfür gibt es erfindungsgemäß mehrere Möglichkeiten:

(A) In einer bevorzugten Ausführungsform der vorliegenden Erfindung wird der Laserschneidstrahl durch ein optisches Element zur Variation von Strahlprofilen hindurchgeführt, welches zu einer Aufweitung des Laserschneidstrahls führt. Der Lasererwärmungsstrahl wird hingegen durch optische Elemente zur Strahlumlenkung (z.B. Spiegel) an diesem optischen Element zur Variation von Strahlprofilen vorbeigeleitet und folglich nicht in seinem Strahlprofil verändert. Danach werden der Laserschneidstrahl und der Lasererwärmungsstrahl durch ein optisches Element zur Strahlüberlagerung überlagert. Bei einer anschließenden Fokussierung der beiden Laserteilstrahlen auf den Bearbeitungsort führt die vorhergehende Aufweitung des Laserschneidstrahls dazu, dass dieser (also der Laserschneidstrahl) einen geringeren Strahldurchmesser am Bearbeitungsort hat als der der Lasererwärmungsstrahl, der an dem optischen Element zur Variation von Strahlprofilen vorbeigeleitet wurde. Gemäß dieser Ausführungsform des erfindungsgemäßen Verfahrens handelt es sich bei dem optischen Element zur Variation von Strahlprofilen um ein optisches Element zur Aufweitung eines Laserstrahls.

(B) In einer weiteren bevorzugten Ausführungsform der vorliegenden Erfindung wird der Lasererwärmungsstrahl durch ein optisches Element zur Variation von Strahlprofilen hindurchgeführt, das zu einer Defokussierung des Lasererwärmungsstrahls führt. Der Laserschneidstrahl wird hingegen an diesem optischen Element zur Variation von Strahlprofilen vorbeigeleitet und folglich nicht defokussiert. Danach werden der Laserschneidstrahl und der Lasererwärmungsstrahl durch ein optisches Element zur Strahlüberlagerung überlagert. Während der Laserschneidstrahl auf den Bearbeitungsort fokussiert ist und damit per Definition hier seinen geringsten Strahldurchmesser und damit auch seine höchste Leistungsdichte aufweist, ist der Lasererwärmungsstrahl am Bearbeitungsort nicht im Fokus und erreicht folglich hier auch nicht seinen geringsten Strahldurchmesser und damit auch nicht seine höchste Leistungsdichte. Gemäß dieser Ausführungsform des erfindungsgemäßen Verfahrens handelt es sich bei dem optischen Element zur Variation von Strahlprofilen um ein optisches Element zur Defokussierung eines Laserstrahls.

(C) In einer weiteren Ausführungsform der vorliegenden Erfindung werden die beiden Möglichkeiten (A) und (B) miteinander kombiniert. Folglich wird der Laserschneidstrahl durch ein optisches Element zur Aufweitung eines Laserstrahls hindurchgeführt, während der Lasererwärmungsstrahl durch ein optisches Element zur Defokussierung eines Laserstrahls hindurchgeführt wird. Danach werden der Laserschneidstrahl und der Lasererwärmungsstrahl durch ein optisches Element zur Strahlüberlagerung überlagert.

Eine bevorzugte Ausführungsform der vorliegenden Erfindung betrifft daher ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls und/oder der Lasererwärmungsstrahl durch ein optisches Element zur Defokussierung eines Laserstrahls geleitet wird/werden, so dass der Lasererwärmungsstrahl einen größeren Strahldurchmesser als der Laserschneidstrahl hat.

Eine bevorzugte Ausführungsform der vorliegenden Erfindung betrifft daher ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls und/oder der Lasererwärmungsstrahl durch ein optisches Element zur Defokussierung eines Laserstrahls geleitet wird/werden, so dass der Lasererwärmungsstrahl einen größeren Strahldurchmesser am Bearbeitungsort als der Laserschneidstrahl hat. Dies bedeutet, dass der Strahldurchmesser $d2$ (am Bearbeitungsort) des Lasererwärmungsstrahls größer ist als der Strahldurchmesser $d1$ (am Bearbeitungsort) des Laserschneidstrahls.

Anders ausgedrückt betrifft die vorliegende Erfindung betrifft ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls geleitet wird oder der Lasererwärmungsstrahl durch ein optisches Element zur Defokussierung eines Laserstrahls geleitet wird oder der Laserschneidstrahl durch ein optisches Element zur Aufweitung eines Laserstrahls und der Lasererwärmungsstrahl durch ein optisches Element zur Defokussierung eines Laserstrahls geleitet wird, so dass der Lasererwärmungsstrahl einen größeren Strahldurchmesser als der Laserschneidstrahl hat.

Eine bevorzugte Ausführungsform der vorliegenden Erfindung betrifft daher ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls geleitet wird oder der Lasererwärmungsstrahl durch ein optisches Element zur Defokussierung eines Laserstrahls geleitet wird oder der Laserschneidstrahl durch ein optisches Element zur Aufweitung eines Laserstrahls und der Lasererwärmungsstrahl durch ein optisches Element zur Defokussierung eines Laserstrahls geleitet wird, so dass der Lasererwärmungsstrahl einen größeren Strahldurchmesser am Bearbeitungsort als der Laserschneidstrahl hat.

Eine bevorzugte Ausführungsform der vorliegenden Erfindung betrifft ebenfalls ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls geleitet wird und der Lasererwärmungsstrahl an dem optischen Element zur Aufweitung eines Laserstrahls vorbeigeleitet wird, so dass der Lasererwärmungsstrahl einen größeren Strahldurchmesser (am Bearbeitungsort) als der Laserschneidstrahl hat.

In dem oben beschriebenen Fall bedeutet dies, dass der Laserschneidstrahl durch Aufweitung einen Strahldurchmesser d1 (am Bearbeitungsort) aufweist, der kleiner ist als der Strahldurchmesser d2 (am Bearbeitungsort) des Lasererwärmungsstrahls aber auch kleiner als der Strahldurchmesser d0 (am Bearbeitungsort) des Ursprungslaserstrahls. Da der Lasererwärmungsstrahl in seinem Strahlprofil nicht verändert wurde, ist in diesem Fall d1 < d2 und d2 = d0.

Eine weitere bevorzugte Ausführungsform der vorliegenden Erfindung betrifft ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Lasererwärmungsstrahl durch ein optisches Element zur Defokussierung eines Laserstrahls geleitet wird und der Laserschneidstrahl an dem optischen Element zur Defokussierung eines Laserstrahls vorbeigeleitet wird, so dass der Lasererwärmungsstrahl einen größeren Strahldurchmesser (am Bearbeitungsort) als der Laserschneidstrahl hat.

In dem oben beschriebenen Fall bedeutet dies, dass der Lasererwärmungsstrahl durch Defokussierung einen Strahldurchmesser d2 (am Bearbeitungsort) aufweist, der größer ist als der Strahldurchmesser d1 (am Bearbeitungsort) des Laserschneidstrahls aber auch größer als der Strahldurchmesser d0 (am Bearbeitungsort) des Ursprungslaserstrahls. Da der Laserschneidstrahl in seinem Strahlprofil nicht verändert wurde, ist in diesem Fall d1 = d0 und d1 < d2.

Eine weitere bevorzugte Ausführungsform der vorliegenden Erfindung betrifft ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls und der Lasererwärmungsstrahl durch ein optisches Element zur Defokussierung eines Laserstrahls geleitet wird, so dass der Lasererwärmungsstrahl einen größeren Strahldurchmesser (am Bearbeitungsort) als der Laserschneidstrahl hat.

In dem oben beschriebenen Fall bedeutet dies, dass der Lasererwärmungsstrahl durch Defokussierung einen Strahldurchmesser d2 (am Bearbeitungsort) aufweist, der größer ist als der Strahldurchmesser d1 (am Bearbeitungsort) des Laserschneidstrahls aber auch größer als der Strahldurchmesser d0 (am Bearbeitungsort) des Ursprungslaserstrahls. Zugleich der Laserschneidstrahl durch Aufweitung einen Strahldurchmesser d1 (am Bearbeitungsort) aufweist, der nicht nur kleiner ist als der Strahldurchmesser d2 (am Bearbeitungsort) des Lasererwärmungsstrahls sondern auch kleiner als der Strahldurchmesser d0 (am Bearbeitungsort) des Ursprungslaserstrahls. Da in diesem Fall sowohl Laserschneidstrahl als auch Lasererwärmungsstrahl in ihren Strahlprofilen erfindungsgemäß verändert wurden, ist in diesem Fall d1 < d0 < d2.

Zusammengefasst betrifft daher die vorliegende Erfindung auch ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls und/oder der Lasererwärmungsstrahl durch ein optisches Element zur Defokussierung eines Laserstrahls geleitet wird/werden, so dass der Lasererwärmungsstrahl einen größeren Strahldurchmesser am Bearbeitungsort als der Laserschneidstrahl hat, wobei der Strahldurchmesser d1 (am Bearbeitungsort) des Laserschneidstrahls kleiner als der Strahldurchmesser d2 (am Bearbeitungsort) des Lasererwärmungsstrahls ist;

und der Strahldurchmesser d1 (am Bearbeitungsort) des Laserschneidstrahls kleiner oder gleich dem Strahldurchmesser d0 (am Bearbeitungsort) des Ursprungslaserstrahls und der Strahldurchmesser d2 (am Bearbeitungsort) des Lasererwärmungsstrahls größer als der Strahldurchmesser d0 (am Bearbeitungsort) des Ursprungslaserstrahls ist;

oder

der Strahldurchmesser d1 (am Bearbeitungsort) des Laserschneidstrahls kleiner als der Strahldurchmesser d0 (am Bearbeitungsort) des Ursprungslaserstrahls und der Strahldurchmesser d2 (am Bearbeitungsort) des Lasererwärmungsstrahls größer oder gleich dem Strahldurchmesser d0 (am Bearbeitungsort) des Ursprungslaserstrahls ist.

In einer Ausführungsform des erfindungsgemäßen Verfahrens handelt es sich bei dem Ursprungslaserstrahl, aus dem die beiden Laserteilstrahlen durch einen Strahlteiler erzeugt werden, um einen unpolarisierten Laserstrahl, der durch einen Polarisationsstrahlteiler in zwei Laserteilstrahlen mit senkrecht zueinander stehenden Polarisationsrichtungen aufgeteilt werden. Nach Variation des Strahlprofils eines oder beider Laserteilstrahlen gemäß den oben aufgeführten Möglichkeiten (A), (B) oder (C) können diese beiden senkrecht zueinander polarisierten Laserteilstrahlen durch ein optisches Element zur Strahlvereinigung, bei dem es sich ebenfalls um einen Polarisationsstrahlteiler handelt, überlagert bzw. superponiert werden.

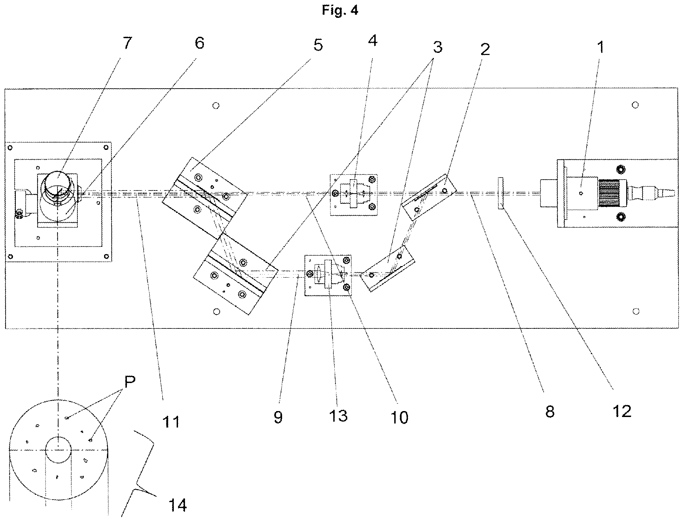

In einer weiteren Ausführungsform des erfindungsgemäßen Verfahrens handelt es sich bei dem Ursprungslaserstrahl, aus dem die beiden Laserteilstrahlen durch einen Strahlteiler erzeugt werden, um einen linear polarisierten Laserstrahl, der zunächst durch einen Polarisationsdreher (z.B. eine Halbwellenverzögerungsplatte, auch λ/2-Platte) im Strahlengang des Ursprungslaserstrahls geleitet wird (siehe Fig. 4), wodurch zwei Komponenten mit senkrecht zueinander stehenden Polarisationsebenen, also eine vertikale und eine horizontale Komponente, entstehen. Hierdurch wird bereits die Gesamtleistung des Laserursprungsstrahls auf die beiden Komponenten aufgeteilt, wobei dies in einem Verhältnis je nach Wahl des Polarisationsdrehers geschieht. Bei anschließender Leitung des Laserursprungstrahls aus den beiden Komponenten mit senkrecht zueinander stehenden Polarisationsrichtungen durch einen Polarisationsstrahlteiler wird eine der beiden Komponenten reflektiert und die andere durchgelassen, so dass zwei Laserteilstrahlen mit senkrecht zueinander stehenden Polarisationsrichtungen resultieren. Nach Variation des Strahlprofils eines oder beider Laserteilstrahlen gemäß den oben aufgeführten Möglichkeiten (A), (B) oder (C) können diese beiden senkrecht zueinander polarisierten Laserteilstrahlen durch ein optisches Element zur Strahlvereinigung, bei dem es sich ebenfalls um einen Polarisationsstrahlteiler handelt, überlagert bzw. superponiert werden.

Bei den drei oben beschriebenen alternativen Verfahren (A), (B) und (C) zur Strahlveränderung nach Strahlteilung führt die Variation des Strahlprofils eines oder beider Laserteilstrahlen, also von Laserschneidstrahl und/oder Lasererwärmungsstrahl, letztlich zu unterschiedlichen Strahldurchmessern am Bearbeitungsort der beiden Laserteilstrahlen, also von Laserschneidstrahl und Lasererwärmungsstrahl. Eine Verringerung des Strahldurchmessers am Bearbeitungsort führt natürlich auch zu einer Erhöhung der Leistungsdichte am Bearbeitungsort, wobei dies natürlich nur im Vergleich zu dem jeweiligen Laserteilstrahl vor der Variation des Strahlprofils durch optische Elemente im Strahlengang gilt. Wie sich die Leistungsdichte im Strahldurchmesser am Bearbeitungsort zwischen den beiden Laserteilstrahlen, also zwischen Laserschneidstrahl und Lasererwärmungsstrahl, verhält, hängt natürlich auch wesentlich von der Gesamtleistung des jeweiligen Laserteilstrahls ab. Diese muss natürlich bei dem erfindungsgemäßen Verfahren ebenfalls berücksichtigt werden.

Je nach Wahl des optischen Elementes zur Strahlteilung ist es möglich, den ursprünglichen Laserstrahl in unterschiedlichen Energieverhältnissen in den Laserschneidstrahl und den Lasererwärmungsstrahl aufzuteilen. Gemäß einer Ausführungsform der vorliegenden Erfindung wird das optische Element zur Strahlteilung derart gewählt, dass sich die Gesamtenergie des ursprünglichen Laserstrahls bei der Strahlteilung auf den Laserschneidstrahl und den Lasererwärmungsstrahl je nach Erfordernis von Durchmesserverhältnis und Leistungsdichte am in einem Verhältnis von 1:1 oder größer oder kleiner 1:1 aufgeteilt wird, wobei jedoch 1:1 besonders bevorzugt ist.

Gemäß einer bevorzugten Ausführungsform der vorliegenden Erfindung wird das optische Element zur Strahlteilung derart gewählt, dass sich die Gesamtenergie des ursprünglichen Laserstrahls bei der Strahlteilung auf den Laserschneidstrahl und den Lasererwärmungsstrahl in einem Verhältnis von 1:1 aufteilt.

Eine besonders bevorzugte Ausführungsform der vorliegenden Erfindung betrifft ein Verfahren zum Laserschneiden von Elektrodenfolien und/oder Separatorenfolien für elektrochemische Energiespeicher, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls geleitet wird oder der Lasererwärmungsstrahl durch ein optisches Element zur Defokussierung eines Laserstrahls geleitet wird oder der Laserschneidstrahl durch ein optisches Element zur Aufweitung eines Laserstrahls und der Lasererwärmungsstrahl durch ein optisches Element zur Defokussierung eines Laserstrahls geleitet wird, so dass der Lasererwärmungsstrahl einen größeren Strahldurchmesser am Bearbeitungsort als der Laserschneidstrahl hat, wobei die Gesamtenergie des Laserursprungsstrahls bei der Strahlteilung auf den Laserschneidstrahl und den Lasererwärmungsstrahl in einem Verhältnis von 1:1 aufgeteilt wird, und wobei die maximale Leistungsdichte (am Bearbeitungsort) des Lasererwärmungsstrahls höchstens 55% der maximalen Leistungsdichte (am Bearbeitungsort) des Laserschneidstrahls beträgt und der Strahldurchmesser d2 (am Bearbeitungsort) des Lasererwärmungsstrahls 150% des Strahldurchmesser d1 (am Bearbeitungsort) des Laserschneidstrahls beträgt, und wobei in dem Bereich d2 - d1 (also d3), definiert als der Bereich zwischen dem Strahldurchmesser d2 (am Bearbeitungsort) des Lasererwärmungsstrahls und dem Strahldurchmesser d1 (am Bearbeitungsort) des Laserschneidstrahls die mittlere Leistungsdichte des Lasererwärmungsstrahls größer als die mittlere Leistungsdichte des Laserschneidstrahls ist.

Eine weitere Möglichkeit zur Erzeugung des erfindungsgemäßen Laserschneidstrahls und des erfindungsgemäßen Lasererwärmungsstrahls besteht darin, zwei Laserlichtquellen, eine zur Bereitstellung des Laserschneidstrahls und eine zur Bereitstellung des Lasererwärmungsstrahls, zu verwenden und die von diesen beiden Laserlichtquellen ausgehenden Laserstrahlen durch ein optisches Element zur Strahlüberlagerung (auch als Strahlteiler bezeichnet) zu überlagern. Natürlich muss auch hier gewährleistet werden, dass der Lasererwärmungsstrahl einen größeren Strahldurchmesser (am Bearbeitungsort) aufweist als der Laserschneidstrahl. Erfindungsgemäß können hierbei sowohl zwei identische als auch zwei verschiedene Laserlichtquellen verwendet werden.

Besonders bevorzugt ist gemäß der vorliegenden Erfindung, wenn die Überlagerung der beiden Laserstrahlen, also von Laserschneidstrahl und Lasererwärmungsstrahl, ohne Verlust von Energie erfolgt.

Bei einer Ausführungsform mit zwei verschiedenen Laserlichtquellen können der Laserschneidstrahl und der Lasererwärmungsstrahl von vornhinein unterschiedliche Strahldurchmesser und Leistungsdichten aufweisen und müssen folglich lediglich durch ein optisches Element zur Strahlüberlagerung überlagert werden.

In einer weiteren Ausführungsform ist es möglich, dass vor der Überlagerung der beiden Laserstrahlen Aufteilung des ursprünglichen Laserstrahls in die beiden Laserteilstrahlen, also vor der Überlagerung von Laserschneidstrahl und Lasererwärmungsstrahl, einer oder sogar beide Laserstrahlen, also Laserschneidstrahl und/oder Lasererwärmungsstrahl, unabhängig voneinander durch optische Elemente im Strahlengang des jeweiligen Laserstrahls in ihrem Strahlprofil verändert (bzw. variiert) werden, so dass der Laserschneidstrahl einen geringeren Strahldurchmesser (am Bearbeitungsort) aufweist als der Lasererwärmungsstrahl und vorzugsweise zugleich der Laserschneidstrahl eine höhere Leistungsdichte (in W/cm$^2$) im Strahldurchmesser **d1** am Bearbeitungsort aufweist als der Lasererwärmungsstrahl im Strahldurchmesser **d1.**

Hierfür gibt es erfindungsgemäß mehrere Möglichkeiten, die zum Teil bereits im Abschnitt zu den zwei Laserteilstrahlen beschrieben wurden. Diese können analog auch für den Fall zweier Laserstrahlen aus zwei identischen aber auch aus zwei unterschiedlichen Laserlichtquellen angewandt werden.

(A) In einer bevorzugten Ausführungsform der vorliegenden Erfindung wird der erste Laserstrahl (der Laserschneidstrahl) durch ein optisches Element zur Aufweitung eines Laserstrahls hindurchgeführt. Der zweite Laserstrahl (der Lasererwärmungsstrahl) wird durch zumindest ein optisches Element zur Strahlumlenkung (z.B. einen oder mehrere Spiegel) an diesem optischen Element zur Aufweitung eines Laserstrahls vorbeigeleitet und folglich nicht in seinem Strahlprofil verändert. Danach werden der Laserschneidstrahl und der Lasererwärmungsstrahl durch ein optisches Element zur Strahlüberlagerung überlagert. Bei einer anschließenden Fokussierung der beiden Laserstrahlen auf den Bearbeitungsort führt die vorhergehende Aufweitung des Laserschneidstrahls dazu, dass dieser einen geringeren Strahldurchmesser am Bearbeitungsort hat als der Lasererwärmungsstrahl.

(B) In einer weiteren bevorzugten Ausführungsform der vorliegenden Erfindung wird der zweite Laserstrahl (der Lasererwärmungsstrahl) durch ein optisches Element zur Defokussierung eines Laserstrahls und somit defokussiert. Der erste Laserstrahl (der Laserschneidstrahl) wird an diesem optischen Element zur Defokussierung eines Laserstrahls vorbeigeleitet und folglich auch nicht defokussiert. Laserschneidstrahl und Lasererwärmungsstrahl werden dann durch ein optisches Element zur Strahlüberlagerung überlagert. Während der Laserschneidstrahl nach Durchtritt durch die sich an die Überlagerung anschließende Fokussiervorrichtung (eine für beide Laserstrahlen) auf den Bearbeitungsort fokussiert ist und damit per Definition hier seinen geringsten Strahldurchmesser und damit auch seine höchste Leistungsdichte aufweist, ist der Lasererwärmungsstrahl am Bearbeitungsort nicht im Fokus und erreicht folglich hier auch nicht seinen geringsten Strahldurchmesser und damit auch nicht seine höchste Leistungsdichte.

(C) In einer weiteren Ausführungsform der vorliegenden Erfindung werden zwei Laserlichtquellen verwendet, die unterschiedliche Wellenlängen emittieren, wobei der erste Laserstrahl (der Laserschneidstrahl) eine kürze Wellenlänge besitzt als der zweite Laserstrahl (der Lasererwärmungsstrahl). Laserschneidstrahl und Lasererwärmungsstrahl werden dann durch ein optisches Element zur Strahlüberlagerung überlagert. Bei einer anschließenden Fokussierung von Laserschneidstrahl und Lasererwärmungsstrahl auf den Bearbeitungsort führt die im Vergleich zum Lasererwärmungsstrahl kürzere Wellenlänge des Laserschneidstrahls dazu, dass dieser einen geringeren Strahldurchmesser am Bearbeitungsort hat als der Lasererwärmungsstrahl.

(D) In einer weiteren Ausführungsform der vorliegenden Erfindung werden einige oder alle der genannten drei Möglichkeiten (A), (B) und (C) miteinander kombiniert. Folglich ist es denkbar, die Möglichkeiten (A) und (B), die Möglichkeiten (A) und (C), die Möglichkeiten (B) und (C), oder auch die Möglichkeiten (A), (B) und (C) miteinander zu kombinieren.

Die oben genannten Möglichkeiten (A), (B), (C) und (D) führen bei der Verwendung identischer Laserlichtquellen dazu, dass nach der Veränderung des Strahlprofils des Laserschneidstrahls und/oder des Lasererwärmungsstrahl der Laserschneidstrahl einen geringeren Strahldurchmesser am Bearbeitungsort hat als der Lasererwärmungsstrahl. Bei der Verwendung zweier unterschiedlicher Laserlichtquellen müssen die Bedingungen und Verfahrensparameter derart gewählt werden, dass auch in diesen Fällen der Laserschneidstrahl einen geringeren Strahldurchmesser am Bearbeitungsort hat als der Lasererwärmungsstrahl. Auch hier muss erfindungsgemäß also gelten, dass der Strahldurchmesser d2 (am Bearbeitungsort) des Lasererwärmungsstrahls größer ist als der Strahldurchmesser d1 (am Bearbeitungsort) des Laserschneidstrahls.

In einer Ausführungsform des erfindungsgemäßen Verfahrens werden zwei Laserstrahlen, also Laserschneidstrahl und Lasererwärmungsstrahl, mit senkrecht zueinander stehenden Polarisationsrichtungen verwendet. Nach Variation des Strahlprofils des Laserschneidstrahls und/oder des Lasererwärmungsstrahls gemäß den oben aufgeführten Möglichkeiten (A), (B), (C) oder (D) können diese beiden senkrecht zueinander polarisierten Laserstrahlen durch ein optisches Element zur Strahlüberlagerung, bei dem es sich um einen Polarisationsstrahlteiler handelt, überlagert bzw. superponiert werden.

Bei der Superposition (bzw. Überlagerung) von zwei Laserstrahlen, nämlich dem Laserschneidstrahl und dem Lasererwärmungsstrahl, ist besonders bevorzugt, dass am Bearbeitungsort die optische Achse des ersten Laserstrahls (des Laserschneidstrahls), welcher einen geringeren Strahldurchmesser am Bearbeitungsort und vorzugsweise auch eine höhere Leistungsdichte am Bearbeitungsort als der zweite Laserstrahl (der Lasererwärmungsstrahl) aufweist, innerhalb der Fläche liegt, die durch den Strahldurchmesser des zweiten Laserstrahls (des Lasererwärmungsstrahls) am Bearbeitungsort definiert ist. Noch mehr bevorzugt ist, wenn am Bearbeitungsort die durch den Strahldurchmesser des ersten Laserstrahls (des Laserschneidstrahls), definierte Fläche vollständig innerhalb der Fläche liegt, die durch den Strahldurchmesser des zweiten Laserstrahls (des Lasererwärmungsstrahls) am Bearbeitungsort definiert ist. Noch mehr bevorzugt ist jedoch, wenn am Bearbeitungsort die optische Achse des ersten Laserstrahls (des Laserschneidstrahls) an demselben Punkt am Bearbeitungsort liegt wie die optische Achse des zweiten Laserstrahls (des Lasererwärmungsstrahls), d.h. wenn also die optischen Achsen beider Laserstrahlen, also von Laserschneidstrahl und Lasererwärmungsstrahl, am Bearbeitungsort deckungsgleich sind. Anders ausgedrückt ist es erfindungsgemäß besonders bevorzugt, wenn der erste Laserstrahl (der Laserschneidstrahl) und der zweite Laserstrahl (der Lasererwärmungsstrahl) derart superponiert bzw. überlagert werden, dass die beiden Laserstrahlen, also Laserschneidstrahl und Lasererwärmungsstrahl, am Bearbeitungsort konzentrisch angeordnet sind.

In Ausführungsformen der vorliegenden Erfindung, in denen als Laserschneidstrahl und Lasererwärmungsstrahl zwei Laserstrahlen mit unterschiedlicher Wellenlänge verwendet werden, können diese beiden Laserstrahlen, also Laserschneidstrahl und Lasererwärmungsstrahl, durch einen dichroitischen Strahlteiler als optisches Element zur Strahlüberlagerung überlagert bzw. superponiert werden. Hierbei muss der dichroitische Strahlteiler so ausgewählt werden, dass er für die Wellenlänge des einen Laserstrahls durchlässig ist, während er die Wellenlänge des anderen Laserstrahls reflektiert. Gleichzeitig muss der dichroitische Strahlteiler so im Strahlengang angeordnet sein, dass der Laserstrahl, für dessen Wellenlänge der dichroitische Strahlteiler durchlässig ist, in Durchlassrichtung auf den dichroitische Strahlteiler auftrifft, während der Laserstrahl, dessen Wellenlänge der dichroitische Strahlteiler reflektiert, so auf den dichroitischen Strahlteiler auftrifft, dass dieser Laserstrahl in Durchlassrichtung reflektiert wird.

Bei den oben beschriebenen alternativen Verfahren (A), (B), (C) und (D) zur Strahlveränderung führt die Variation des Strahlprofils eines oder beider Laserstrahlen, also des Laserschneidstrahls und/oder des Lasererwärmungsstrahls, letztlich zu unterschiedlichen Strahldurchmessern der beiden Laserstrahlen am Bearbeitungsort. Eine Verringerung des Strahldurchmessers am Bearbeitungsort führt natürlich auch zu einer Erhöhung der Leistungsdichte am Bearbeitungsort, wobei dies natürlich nur im Vergleich zu dem jeweiligen Laserstrahl vor der Variation des Strahlprofils durch optische Elemente im Strahlengang gilt. Wie sich die Leistungsdichte im Strahldurchmesser am Bearbeitungsort zwischen den beiden Laserstrahlen, also zwischen Laserschneidstrahl und Lasererwärmungsstrahl, verhält, hängt natürlich auch wesentlich von der Gesamtleistung des jeweiligen Laserstrahls ab. Diese muss natürlich bei dem erfindungsgemäßen Verfahren ebenfalls berücksichtigt werden. Bei der Verwendung zweier unterschiedlicher oder identischer Laserlichtquellen ist es natürlich möglich, dass die beiden Laserlichtquellen auf unterschiedliche Laserleistungen eingestellt werden.

Unabhängig davon, auf welche Weise der erfindungsgemäße Laserschneidstrahl und der erfindungsgemäße Lasererwärmungsstrahl erzeugt (aus einer Laserlichtquelle oder aus zwei Laserlichtquellen), eventuell in ihrem Stahlprofil verändert und schließlich überlagert werden, müssen die überlagerten Laserschneidstrahlen und Lasererwärmungsstrahlen auf das zu schneidende Objekt bzw. den Bearbeitungsort, hier eine Elektrodenfolie oder eine Separatorenfolie, fokussiert werden. Dies geschieht im Anschluss an die Überlagerung der beiden Laserstrahlen durch ein in den Strahlengang der überlagerten Laserstrahlen eingebrachtes optisches Element zur Fokussierung eines Laserstrahls. Hierbei kann es sich z.B. um eine Linse handeln. Es sei hierbei erwähnt, dass in den Ausführungsformen, in denen der Lasererwärmungsstrahl vor der Überlagerung mit dem Laserschneidstrahl defokussiert wurde, nach Durchtritt der beiden überlagerten Laserstrahlen durch das gemeinsame optische Element zur Fokussierung lediglich der Laserschneidstrahl auf den Bearbeitungsort fokussiert ist, während der Lasererwärmungsstrahl aufgrund der vorhergehenden Defokussierung hier nicht im Fokus ist.

Die vorliegende Erfindung ist somit ebenfalls auf ein Verfahren zum Laserschneiden von Elektrodenfolien und/oder Separatorenfolien für elektrochemische Energiespeicher gerichtet, wobei im Anschluss an die Überlagerung des Laserschneidstrahles mit dem Lasererwärmungsstrahl Laserschneidstrahl und Lasererwärmungsstrahl durch ein gemeinsames in deren Strahlengang eingebrachtes optisches Element zur Fokussierung eines Laserstrahls auf das zu schneidende Objekt (bzw. auf den Bearbeitungsort) fokussiert werden. Es ist klar, dass dieser Verfahrenschritt erst nach der Erzeugung des erfindungsgemäßen Laserschneidstrahls erfolgt.

Ganz allgemein ist natürlich für das Laserschneiden von Objekten, auch für z.B. das Herausschneiden von Elektrodenblättern bzw. Separatorenblättern aus Elektrodenfolien bzw. Separatorenfolien, von Bedeutung, dass Laserschneidstrahl und Lasererwärmungsstrahl gemeinsam relativ zu dem zu schneidenden Objekt bewegt werden. Hierfür gibt es mehrere Möglichkeiten: Zum einen kann das zu schneidende Objekt relativ zu einem feststehenden Laserschneidkopf, der aus der beschrieben Anordnung und einer Fokussiereinrichtung für beide Strahlen besteht, bewegt werden, oder der Laserschneidkopf kann relativ zu dem feststehenden zu schneidenden Objekt bewegt werden, oder Laserschneidstrahl und Lasererwärmungsstrahl können über bewegliche Spiegel (auch oft als Scanspiegel bezeichnet) über das feststehende zu schneidende Objekt geführt werden. Zusätzlich ist es möglich, dass zwei oder mehrere dieser genannten Möglichkeiten miteinander kombiniert werden. So kann z.B. sowohl das zu schneidende Objekt als auch der Laserkopf relativ zueinander bewegt werden, um so die Prozessgeschwindigkeit zu erhöhen. Wie diese Schnittführung im Detail realisiert ist gehört zum Stand der Technik und ist somit dem Fachmann bekannt und daher auch nicht Gegenstand der vorliegenden Erfindung.

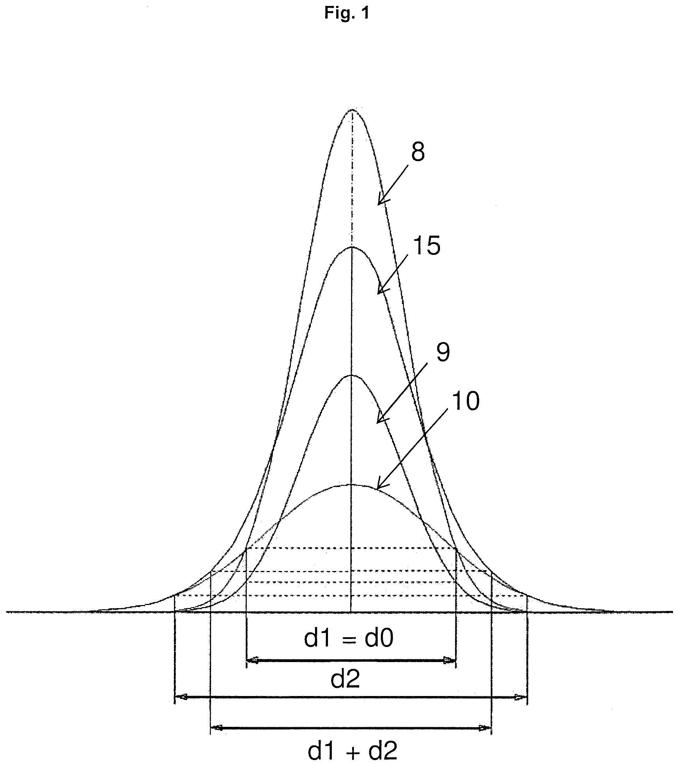

Als eine **alternative Herangehensweise** zur Charakterisierung des erfindungsgemäßen Verfahrens wird das am Bearbeitungsort auftreffende Leistungsdichteprofil (auch als Intensitätsprofil bezeichnet) betrachtet, dass durch Superposition (bzw. Überlagerung) des Laserschneidstrahls mit dem Lasererwärmungsstrahl entsteht. Durch die Überlagerung (bzw. Superposition) von Laserschneidstrahl und Lasererwärmungsstrahl werden am Bearbeitungsort deren Leistungsdichten addiert **(siehe Fig. 1).** Das am Bearbeitungsort resultierende Leistungsdichteprofil wird im Folgenden auch als "überlagertes Leistungsdichteprofil" oder als **"kumuliertes Leistungsdichteprofil"** bezeichnet. Wie bereits oben erwähnt ist erfindungsgemäß besonders bevorzugt, wenn sowohl der Laserschneidstrahl als auch der Lasererwärmungsstrahl ein Gaußsches Strahlprofil aufweisen.

Im Falle eines Laserstrahls mit Gaußschem Strahlprofil kann nun der Anteil der Gesamtleistung ($P_0$) des Laserstrahls mit Gaußschem Strahlprofil, der durch einen bestimmten Abstand (r) von der optischen Achse (hier ist r=0) des Laserstrahls bzw. Laserteilstrahls eingeschlossen wird, durch die folgende Formel (I) beschrieben werden.

$$P(r) \;=\; P_0 \times \left( 1 - e^{-2\left(\frac{r}{r_G}\right)^2} \right) \qquad \textbf{(I)}$$

$P_0$ ist hierbei die Gesamtleistung des Laserstrahls, also die Leistung, die durch den Bereich von der optischen Achse (r = 0) bis ins Unendliche (r = ∞), also das gesamte Strahlprofil, eingeschlossen wird. P(r) ist der Anteil von der Gesamtleistung, der durch einen Bereich von der optischen Achse (r = 0) bis zu einem bestimmten Abstand (r), z.B. den Strahlradius ($r_G$), eingeschlossen wird. Betrachtet man also für einen Laserstrahl mit Gaußschem Strahlprofil den Anteil der Gesamtleistung, der durch den durch den Strahldurchmesser bzw. den Strahlradius definierten Bereich um die optische Achse eingeschlossen wird, so resultiert aus Formel (I), dass durch den Strahlradius ($r_G$) bzw. den Strahldurchmesser ($d_G$) der Bereich des Laserstrahls um die optische Achse eingeschlossen wird, in dem 86,5% der Gesamtleistung ($P_0$) des Laserstrahls enthalten ist. Folglich sind bei einem Laserstrahl mit Gaußschem Strahlprofil in dem Bereich des Strahlprofils außerhalb des Strahldurchmessers ($d_G$) bzw. des Strahlradius ($r_G$) lediglich 13,5% der Gesamtleistung ($P_0$) des Laserstrahls oder Laserteilstrahls enthalten.

Durch eine stärkere Fokussierung (bzw. Defokussierung) eines Laserstrahls mit Gaußschem Strahlprofil wird lediglich die Steilheit des Strahlprofils und somit die Leistungsdichte des Laserstrahls oder Laserteilstrahls erhöht (bzw. verringert), das Verhältnis des Anteiles der Gesamtleistung ($P_0$) innerhalb des durch den Strahldurchmesser ($d_G$)definierten Bereiches (86,5%) und außerhalb des durch den Strahldurchmesser ($d_G$) definierten Bereiches (13,5%) bleibt jedoch erhalten. Damit handelt es sich auch nach Fokussierung bzw. Defokussierung nach wie vor um Laserstrahlen mit Gaußschem Strahlprofil.

Das durch das erfindungsgemäße Verfahren zum Laserschneiden von Elektrodenfolien und/oder Separatorenfolien am Bearbeitungsort durch Überlagerung von Laserschneidstrahl und Lasererwärmungsstrahl erzeugte "kumulierte Leistungsdichteprofil" bzw. das "überlagerte Leistungsdichteprofil" weist **kein Gaußsches Strahlprofil** mehr auf, dadurch gekennzeichnet, dass der Bereich des "kumulierten Leistungsdichteprofils"", der außerhalb des durch den Strahldurchmesser ($d_G$) des "kumulierten Leistungsdichteprofils" eingeschlossenen Bereiches um die optische Achse liegt, einen höheren Anteil an der im "kumulierten Leistungsdichteprofil" enthaltenen Gesamtleistung ($P_0$) hat als dies bei einem Gaußschen Laserstrahl der Fall ist, d.h. einen Anteil an der im "kumulierten Leistungsdichteprofil" enthaltenen Gesamtleistung ($P_0$) größer als 13,5%, bevorzugt größer als 14,0%, weiter bevorzugt größer als 15,0%, weiter bevorzugt größer als 18,0%, weiter bevorzugt größer als 20,0%, oder bevorzugt zwischen 15% und 60%, weiter bevorzugt zwischen 18% und 55%, weiter bevorzugt zwischen 20% und 50%.

Analog zur oben gemachten Definition des Strahlradius für einen Laserstrahl, ist der Strahlradius eines "kumulierten Leistungsdichteprofils" der Abstand (r) zur optischen Achse (hier ist die Leistungsdichte maximal) des "kumulierten Leistungsdichteprofils", bei dem die Intensität (bzw. die Leistungsdichte) des "kumulierten Leistungsdichteprofils" auf 13,5% der Maximalintensität (bzw. der maximalen Leistungsdichte) des "kumulierten Leistungsdichteprofils" abgefallen ist. Analog zu der Definition für Laserstrahlen bzw. Laserteilstrahlen ist der Strahldurchmesser eines "kumulierten Leistungsdichteprofils" der doppelte Strahlradius des "kumulierten Leistungsdichteprofils".

Eine Ausführungsform der vorliegenden Erfindung ist daher gerichtet auf ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat, wobei sich bei der Überlagerung des Laserschneidstrahls und des Lasererwärmungsstrahls die Leistungsdichten von Laserschneidstrahl und Lasererwärmungsstrahl addieren und sich ein kumuliertes Leistungsdichteprofil ergibt, dadurch gekennzeichnet dass der Bereich des kumulierten Leistungsdichteprofils, der außerhalb des durch den Strahldurchmesser eingeschlossenen Bereiches um die optische Achse des kumulierten Leistungsdichteprofils liegt, einen Anteil an der Gesamtleistung ($P_0$) des kumulierten Leistungsdichteprofils hat, der größer als 13,5% ist.

Es ist erfindungsgemäß bevorzugt, dass sich die Leistungsdichten von Laserschneidstrahl und Lasererwärmungsstrahl nach der Überlagerung am Bearbeitungsort addieren, wodurch am bearbeitungsort das bereits erwähnte "kumulierte Leistungsdichteprofil" entsteht. Eine Ausführungsform der vorliegenden Erfindung ist daher gerichtet auf ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat, wobei sich bei der Überlagerung des Laserschneidstrahls und des Lasererwärmungsstrahls die Leistungsdichten von Laserschneidstrahl und Lasererwärmungsstrahl addieren und sich ein kumuliertes Leistungsdichteprofil ergibt.

In bevorzugten Ausführungsformen des erfindungsgemäßen Verfahrens ist bevorzugt, wenn sich bei der Überlagerung des Laserschneidstrahls und des Lasererwärmungsstrahl die Leistungsdichten von Laserschneidstrahl und Lasererwärmungsstrahl addieren, so dass die addierte maximale Leistungsdichte im Bereich von 65% bis 85% der maximalen Leistungsdichte des Ursprungslaserstrahls liegt.

Eine Ausführungsform der vorliegenden Erfindung ist daher gerichtet auf Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat, wobei sich bei der Überlagerung des Laserschneidstrahls und des Lasererwärmungsstrahl die Leistungsdichten von Laserschneidstrahl und Lasererwärmungsstrahl addieren, so dass die addierte maximale Leistungsdichte im Bereich von 65% bis 85% der maximalen Leistungsdichte des Ursprungslaserstrahls liegt.

Erfindungsgemäß wird durch die Überlagerung des Laserschneidstrahls und des Lasererwärmungsstrahl und die damit einhergehende Addition der Leistungsdichten von Laserschneidstrahl und Lasererwärmungsstrahl am Bearbeitungsort ein kumuliertes Leistungsdichteprofil erzeugt, dass eine ausreichend hohe Leistungsdichte aufweist um Elektrodenfolien und/oder Separatorenfolien zu schneiden. Durch die (von der konkreten Anwendung oder Materialzusammensetzung der zu schneidenden Elektrodenfolie abhängigen) ausreichende Leistungsdichte zum Laserschneiden von Elektrodenfolien und/oder Separatorenfolien wird ein Abstand zur optischen Achse des kumulierten Leistungsdichteprofils am Bearbeitungsort definiert, der multipliziert mit zwei als Schnittbreite des kumulierten Leistungsdichteprofils $ds_K$ bezeichnet wird. Dies wurde bereits oben ausgeführt. Es ist bevorzugt wenn die Schnittbreite des kumulierten Leistungsdichteprofils $ds_K$ kleiner als der Strahldurchmesser (am Bearbeitungsort) des Laserschneidstrahls d1 ist.

In bestimmten Ausführungsformen ist ein erfindungsgemäßes Verfahren bevorzugt, wobei sich bei der Überlagerung des Laserschneidstrahls und des Lasererwärmungsstrahl die Leistungsdichten von Laserschneidstrahl und Lasererwärmungsstrahl addieren und sich ein kumuliertes Leistungsdichteprofil ergibt, welches bei einer zum Laserschneiden der Elektrodenfolien und/oder Separatorenfolien ausreichenden Leistungsdichte eine Schnittbreite $ds_K$ definiert mit $ds_K$ kleiner d1 besitzt.

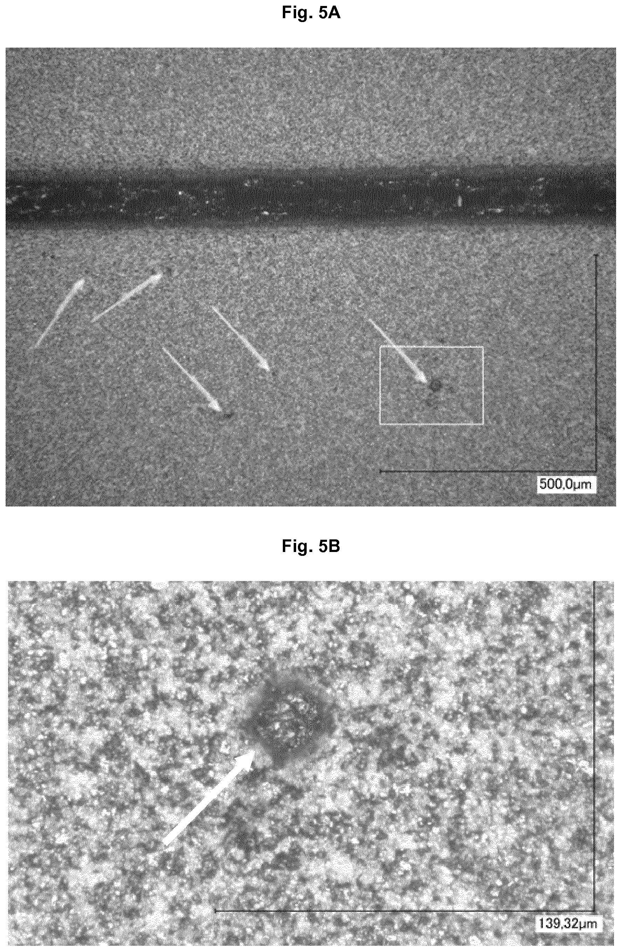

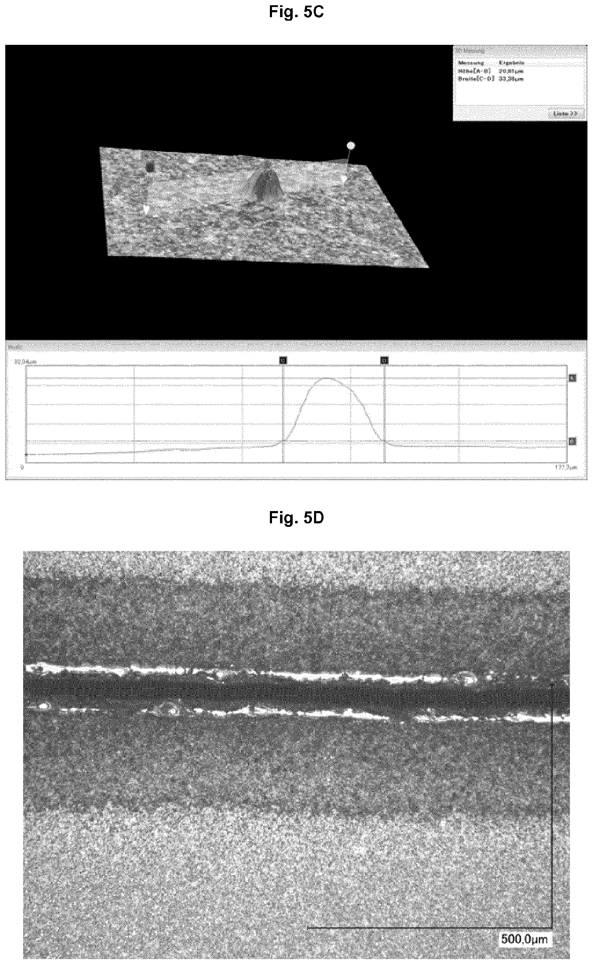

Wie bereits erläutert, führt ein Laserstrahl aus dem Stand der Technik, der zum Schneiden von Elektrodenfolien und/oder Separatorenfolien verwendet wird, zur Partikelbildung und Partikelablagerung (siehe Fig. 5A - C). Dies kann z.B. der hierin verwendete Ursprungslaserstrahl sein. Durch das erfindungsgemäße Verfahren zum Laserschneiden wird jedoch die Partikelbildung vermieden bzw. deren Ablagerung bekämpft, indem die Erwärmungszone um den eigentlichen Schnitt ausgedehnt wird (siehe Fig. 5D). Wie bereits ausführlich erläutert, geschieht dies erfindungsgemäß bevorzugt durch die Auftrennung des Ursprungslaserstrahls in den Laserschneidstrahl und den Lasererwärmungsstrahl, Veränderungen des Strahlprofils von Laserschneidstrahl und/oder Lasererwärmungsstrahl, so dass der Strahldurchmesser am Bearbeitungsort des Laserschneidstrahls d1 kleiner ist als der Strahldurchmesser am Bearbeitungsort des Lasererwärmungsstrahls d2, wobei sich die Leistungsdichten von Laserschneidstrahl und Lasererwärmungsstrahl am Bearbeitungsort zu einem kumulierten Leistungsdichteprofil addieren. Hierbei ist besonders bevorzugt, wenn der Bereich des kumulierten Leistungsdichteprofils (am Bearbeitungsort) außerhalb der Schnittbreite $ds_K$, und besonders bevorzugt der Bereich zwischen $ds_K$ und der der doppelten $ds_K$ ($2ds_K$), eine höhere Leistungsdichte aufweist als der Ursprungslaserstrahl im Bereich $ds_K$ bis $2ds_K$.

Der Bereich $ds_K$ bis $2ds_K$ ist also ein Bereich um die optische Achse des kumulierten Leistungsdichteprofil, der auf der einen Seite durch $ds_K$ begrenzt wird und auf der anderen Seite durch die doppelte $ds_K$ ($2ds_K$) begrenzt wird. Da es sich bei $ds_K$ und somit auch bei $2ds_K$ letztlich lediglich um Abstände zur optischen Achse eines kumulierten Leistungsdichteprofils handelt, kann der Bereich $ds_K$ bis $2ds_K$ (auch wenn er eigentlich auf das kumulierte Leistungsdichteprofil bezogen ist), auch auf andere Strahlprofile, wie z.B. das des Ursprungslaserstrahls bezogen werden.

Eine Ausführungsform der vorliegenden Erfindung ist daher gerichtet auf Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat, wobei sich bei der Überlagerung des Laserschneidstrahls und des Lasererwärmungsstrahl die Leistungsdichten von Laserschneidstrahl und Lasererwärmungsstrahl addieren, wobei die Leistungsdichte (am Bearbeitungsort) des kumulierten Leistungsdichteprofils in dem Bereich $ds_K$ bis $2ds_K$ mindestens 20% größer, bevorzugt mindestens 25% größer, bevorzugt mindestens 30% größer, weiter bevorzugt mindestens 40% größer als die Leistungsdichte des Ursprungslaserstrahls in diesem Bereich ist.

Der Vorteil des erfindungsgemäßen Verfahrens zum Laserschneiden von Elektrodenfolien und/oder Separatorenfolien gegenüber Verfahren aus dem Stand der Technik besteht in der Vermeidung der Partikelbildung bzw. Partikelablagerung beim Laserschneiden.

Betrachtet man z.B. den hierin verwendeten Ursprungslaserstrahl, aus dem durch Strahlteilung der Laserschneidstrahl und der Lasererwärmungsstrahl erzeugt wird, so ist dieser vergleichbar mit den verwendeten Laserstrahlen zum Schneiden aus dem Stand der Technik. Würde der Ursprungslaserstrahl nicht durch einen Strahlteiler geführt, sondern auf den bearbeitungsort fokussiert und dort zum Schneiden verwendet, so würde auch er zu einer Partikelbildung und Partikelablagerung führen. Voraussetzung hierfür ist natürlich, dass der Ursprungslaserstrahl eine zum Schneiden von Elektrodenfolien und oder Separatorenfolien ausreichende Leistungsdichte aufweist und somit eine Schnittbreite des Ursprungslaserstrahls $ds_U$ (siehe oben) definiert werden kann. Im Bereich um den eigentlichen Schnitt, der durch den Ursprungslaserstrahl erzeugt wird und der durch $ds_U$ bestimmt wird, kommt es folglich zu einer Partikelbildung und -ablagerung.

Die vorliegende Erfindung betrifft damit ebenfalls ein Verfahren zum Laserschneiden von Elektrodenfolien und/oder Separatorenfolien für elektrochemische Energiespeicher, wobei der Ursprungslaserstrahl beim Laserschneiden der Elektrodenfolien und/oder Separatorenfolien eine Schnittbreite dsu hat und im Bereich dsu bis 3dsu ablagernde Partikel erzeugt.

Die vorliegende Erfindung betrifft damit ebenfalls ein Verfahren zum Laserschneiden von Elektrodenfolien und/oder Separatorenfolien für elektrochemische Energiespeicher, wobei für das Laserschneiden ein Laserschneidstrahl mit einem Lasererwärmungsstrahl überlagert wird und der Laserschneidstrahl bereits eine zum Laserschneiden der Elektrodenfolien und/oder Separatorenfolien ausreichende Leistungsdichte (in W/cm$^2$) besitzt oder nach Überlagerung mit dem Lasererwärmungsstrahl eine zum Laserschneiden der Elektrodenfolien und/oder Separatorenfolien ausreichende Leistungsdichte erzeugt wird und der Lasererwärmungsstrahl eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln ausreichende Leistungsdichte aufweist und der Lasererwärmungsstrahl einen größeren Strahldurchmesser als der Laserschneidstrahl hat, wobei der Laserschneidstrahl und der Lasererwärmungsstrahl durch Strahlteilung aus einem Ursprungslaserstrahl erzeugt werden, der durch ein optisches Element zur Strahlteilung geleitet und in den Laserschneidstrahl und den Lasererwärmungsstrahl geteilt wird, der Laserschneidstrahl durch ein optisches Element zur Aufweitung eines Laserstrahls und/oder der Lasererwärmungsstrahl durch ein optisches Element zur Defokussierung eines Laserstrahls geleitet wird/werden, und wobei der Ursprungslaserstrahl beim Laserschneiden der Elektrodenfolien und/oder Separatorenfolien eine Schnittbreite $ds_U$ hat und im Bereich $ds_U$ bis $3ds_U$ ablagernde Partikel erzeugt.

Erfindungsgemäß wird natürlich bevorzugt, wenn abgesehen von der Vermeidung der Partikelbildung bzw. -ablagerung die Schnittbreite des kumulierten Leistungsdichteprofils $ds_K$, welches letztlich zum Schneiden der Elektrodenfolie und/oder Separatorenfolie verwendet wird, im Wesentlichen mit der Schnittbreite des Ursprungslaserstrahls dsu übereinstimmt, so dass der erzielte Schnitt vergleichbar ist. Daher ist erfindungsgemäß bevorzugt, wenn $ds_K$ im Bereich von 0,8dsu bis 1,2 dsu, bevorzugt im Bereich von 0,9 dsu bis 1,1 dsu liegt.

### Elektrodenfolien und Separatorenfolien

Wie bereits erwähnt betrifft die vorliegende Erfindung ein Verfahren zum Laserschneiden von Elektrodenfolien und/oder Separatorenfolien zur Bereitstellung von Elektrodenblättern und/oder Separatorenblättern, die für die Herstellung bzw. den Aufbau von elektrochemischen Energiespeichern benötigt werden.

Unter einem **"elektrochemischen Energiespeicher"** soll im Rahmen dieser Erfindung jede Art von Energiespeicher verstanden werden, der Energie in Form von chemischer Energie speichert, welche über eine elektrochemische Reaktion in elektrische Energie umgewandelt und vom Verbraucher entnommen werden kann. Der Begriff "elektrochemischer Energiespeicher" wird hier gleichbedeutend mit dem Begriff "Batterie" verwendet. Unter diese Oberbegriffe "elektrochemischer Energiespeicher" und "Batterie" fallen sowohl Primärbatterien (auch als Primärspeicher bezeichnet) als auch Sekundärbatterien (auch als Akkumulatoren, Akkus oder Sekundärspeicher bezeichnet).

Batterien werden in der Regel durch eine oder mehrere elektrochemische Zellen (auch galvanische Zellen) aufgebaut. Im Fall des Zusammenschlusses mehrerer elektrochemischer Zellen zu einer Batterie können diese zur Erhöhung der Kapazität parallel geschaltet oder zur Erhöhung der erreichbaren Betriebsspannung in Serie geschaltet sein, oder eine Kombination aus Parallel- und Serienschaltung bilden.

Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionisch leitenden Elektrolyten gewährleistet, der zugleich einen elektrischen Isolator zwischen den beiden Elektroden darstellt.

Per Definition werden in der vorliegenden Anmeldung die Begriffe "negative Elektrode" und **"Anode"** synonym verwendet und die Begriffe "positive Elektrode" und **"Kathode"** synonym verwendet. Hierbei erfolgt die Benennung der Elektroden in der vorliegenden Anmeldung entsprechend ihrer Funktion beim Entladungsprozess. Hierbei ist die "negative Elektrode" bzw. "Anode" die Elektrode, an der die Oxidationsreaktion stattfindet, und die "positive Elektrode" bzw. "Kathode" die Elektrode, an der die Reduktionsreaktion stattfindet. Dem Fachmann ist jedoch bewusst, dass während des Aufladungsprozesses einer Sekundärbatterie die Anode zur Kathode und die Kathode zur Anode wird.

Während bei Primärbatterien diese Entladereaktion irreversibel ist, ist sie bei Sekundärbatterien reversibel, so dass also die Möglichkeit besteht, die bei der Entladung erfolgte Umwandlung chemischer Energie in elektrische Energie umzukehren und somit die Sekundärbatterie wieder aufzuladen. Hierbei sind je nach Typ der Sekundärbatterie hunderte bis tausende Lade-Entlade-Zyklen möglich.

In einer bevorzugten Ausführungsform der vorliegenden Erfindung ist das erfindungsgemäße Verfahren zum Laserschneiden von Elektrodenfolien und/oder Separatorenfolien auf die Bereitstellung von Elektrodenblättern und/oder Separatorenblätter für die Herstellung von Sekundärbatterien (Akkumulatoren) gerichtet.

Beispiele für Sekundärbatterien, für deren Herstellung die erfindungsgemäß geschnittenen Elektrodenfolien und/oder Separatorenfolien verwendet werden können, umfassen, ohne jedoch hierauf beschränkt zu sein: Nickel-Cadmium-Akku (NiCd), Nickel-Metallhydrid-Akku (NiMH), Lithium-Ionen-Akkus (Li-Ion) u.a. umfassend Lithium-Cobalt-dioxid-Akku $(LiCoO_2)$, Lithium-Polymer-Akku (LiPo), Lithium-Mangan-Akku (LiMn), Lithium-Eisenphosphat-Akku $(LiFePO_4)$, Lithium-Schwefel-Akku (LiS), sowie Lithium-Titanat-Akku (LiTi). Dem Fachmann sind weitere Ausführungsformen von Akkus bekannt, für die die vorliegende Erfindung geeignet ist. Unter den bekannten Sekundärbatterien werden vergleichsweise hohe Energiedichten insbesondere von Lithium-Ionen-Akkus erreicht.

In einer besonders bevorzugten Ausführungsform der vorliegenden Erfindung ist das erfindungsgemäße Verfahren zum Laserschneiden von Elektrodenfolien und/oder Separatorenfolien auf die Bereitstellung von Elektrodenblättern und/oder Separatorenblätter für die Herstellung von Lithium-Ionen-Akkus gerichtet.

Daher sei an dieser Stelle der Aufbau einer Sekundärbatterie am Beispiel des Lithium-Ionen-Akkus verdeutlicht.

Lithium-Ionen-Akkus (wie auch andere Batterie-Typen) weisen üblicherweise in ihrem Inneren einen **"Elektro-**

denstapel" auf, der von einer äußeren Umhüllung umschlossen ist. Für die vorliegende Erfindung soll unter dem Begriff "Elektrodenstapel" eine Anordnung aus zumindest einer Anode, einer Kathode und einem dazwischen angeordneten Elektrolyten verstanden werden. In vielen Ausführungsformen wird der besagte Elektrolyt zumindest teilweise von einem Separator aufgenommen, wobei der Separator dann die beiden Elektroden trennt und somit einen Kurzschluss verhindert. Oft weisen jedoch die Elektrodenstapel mehrere Schichten von Anode/Separator/Kathode auf.

Sowohl die Elektroden als auch die Separatoren sind in der Regel flächig bzw. plattenförmig ausgebildet. Man spricht daher in diesem Zusammenhang auch von "Elektrodenblättern" und "Separatorenblättern".

Bei Lithium-Ionen-Akkus (wie auch bei anderen Batterie-Typen) können unterschiedliche Bautypen voneinander differenziert werden:

Bei der klassischen **zylindrischen Batterie** (auch Wickelzelle) wird ein Elektrodenstapel mit der Reihenfolge Anode/Separator/Kathode/Separator gebildet, anschließend aufgerollt bzw. aufgewickelt um dann in den äußeren zylindrischen Mantel der Batterie eingeführt zu werden. Danach erfolgen die Füllung mit dem Elektrolyten und der Verschluss der Batterie.

Bei der **prismatischen Batterie** wird ebenfalls ein Elektrodenstapel mit der Reihenfolge Anode/Separator/Kathode/Separator gebildet, der jedoch im Unterschied zur zylindrischen Batterie nicht aufgerollt sondern gefaltet wird. Bei geringere mechanischer Stabilität im Vergleich zur zylindrischen Batterie ermöglicht jedoch die prismatische Batterie einen einfacheren Zusammenbau und aufgrund ihrer rechteckigen Grundform den Aufbau kompakterer Module.

Im Falle der noch recht neuartigen **Beutelzellen** (auch Coffee-Bag-Zelle) wird ein Elektrodenstapel aus Anode/Separator/Kathode gebildet und in eine beutelartige Umhüllung eingesetzt. Als Elektrolyt werden anschließend in der Regel Elektrolyte auf Polymerbasis eingefüllt, wodurch auf ein starres Gehäuse verzichtet werden kann und was zu einer leichten und zugleich flexiblen Bauweise führt.

Ein Ziel bei der Herstellung von Batterien ist hierbei eine möglichst dichte Packung der Elektrodenstapel, um bei einer möglichst guten Raumausnutzung möglichst hohe Leistungen zu erzielen. Es ist ganz offensichtlich, dass sich bei solchen dichten Packungen kleinere Fertigungsfehler bei den Elektrodenblättern und/oder Separatorenblättern enorm auf die Leistungsfähigkeit der Batterie auswirken können und zu erheblichen Fehlfunktionen resultieren. Wie bereits eingangs erwähnt, können Unregelmäßigkeiten in der Oberfläche bzw. der Elektrodenblätter z.B. in Form von Schnittgraten oder Partikeln auf der Oberfläche dazu führen, dass das isolierende Separatorenblatt durchstoßen wird und es zu einem gefährlichen Kurzschluss in der Batterie führen kann. Durch einen derartigen Kurzschluss kann es nicht nur zu einer Entladung der Batterie, sondern auch zu einem lokalen Erhitzen und damit verbunden sogar zu Bränden und Explosionen kommen. Man spricht bei solchen durch Kurzschlüsse verursachte lokale Erhitzung, die auch die umgebenden Bereiche in Mitleidenschaft zieht und somit zu einem selbstverstärkenden Prozess führt oft von einem "thermischen Durchgehen" (auch "thermal runaway") einer Batterie. Hierfür muss es noch nicht einmal zwingend zu einem vollständigen Durchstoßen des Separatorenblattes kommen. Unter bestimmten Bedingungen kann es ausreichen, wenn der Abstand zwischen den Elektroden durch z.B. Partikel an deren Oberfläche, die sich nur in das Separatorenblatt eindrücken, einen kritischen Wert unterschreitet. Bei einer durchschnittlichen Dicke der üblicherweise verwendeten Separatorenblätter von ca. 20 $\mu$m bis 30 $\mu$m ist dies eine ernstzunehmende Gefahr.

Überraschenderweise hat sich gezeigt, dass das erfindungsgemäße Verfahren zum Laserschneiden von Elektrodenfolien und/oder Separatorenfolien zu einer effektiven Vermeidung einer Partikelbildung an der Oberfläche der Elektrodenblätter bzw. Separatorenblätter führt.

Aus den obigen Ausführungen zu den unterschiedlichen Bautypen für Lithium-Ionen-Akkus (wie auch bei anderen Batterie-Typen) ist offensichtlich, dass die genaue Form und Dimension der Elektrodenblätter und/oder Separatorenblätter wesentlich von dem verwendeten Bautyp der Batterie abhängt. Hinzu kommt, dass natürlich die Größe des jeweiligen Bautyps von den angestrebten Leistungsmerkmalen der Batterie (Kapazität, Spannung, usw.) abhängt.

Daher werden in der Regel die Elektroden sowie die Separatorenblätter zunächst in groß dimensionierten Folien oder Bahnen hergestellt, aus denen dann die einzelnen Elektrodenblätter bzw. Separatorenblätter je nach gewünschter Form und Größe herausgetrennt werden können. Man spricht in diesem Zusammenhang auch von einer Vereinzelung der Elektrodenblätter bzw. Separatorenblätter. In der vorliegenden Anmeldung wird der Begriff **"Elektrodenfolie"** oder auch "Elektrodenbahn" für das in Form einer groß dimensionierten Folie oder Bahn bereitgestellte Elektrodenmaterial verwendet, aus dem dann mittels des erfindungsgemäßen Verfahrens zum Laserschneiden die einzelnen **"Elektrodenblätter",** die letztlich zur Herstellung einer Batterie benötigt werden, herausgetrennt bzw. herausgeschnitten werden. Analog hierzu werden die Begriffe **"Separatorenfolie"** bzw. "Separatorenbahn" in Abgrenzung von dem Begriff **"Separatorenblatt"** verwendet.

Die **Elektroden** umfassen dabei üblicherweise einen flächig ausgebildeten "metallischen Stromkollektor", der mit dem eigentlichen Elektrodenmaterial, dem so genannten **"Aktivmaterial"** beschichtet ist. Zur Herstellung der Elektroden wird üblicherweise ein pastenförmiges Aktivmaterial in einer flachen Schicht auf einen geeigneten Stromkollektor aufgebracht und anschließend getrocknet. Bevorzugt wird das Aktivmaterial auf beide Seiten des Stromkollektors aufgebracht. Allerdings müssen die Stromkollektoren zumindest an einer Stelle elektrisch kontaktierbar sein, um einen Stromableiter anschließen zu können. An dieser Stelle ist der Kollektor deshalb bevorzugt nicht von Aktivmaterial bedeckt.

Das Material aus dem der metallische Stromkollektor gefertigt ist sowie die Zusammensetzung des beschichtenden Aktivmaterials hängen von der Art der Elektrode (Anode oder Kathode) sowie den besonderen Anforderungen der jeweiligen Batterie ab.

Für die Herstellung von Kathoden für Lithium-Ionen-Akkus werden in der Regel bevorzugt Stromkollektoren in Form von Netzen oder Folien aus Aluminium verwendet. Die Stromkollektoren zur Herstellung von Kathoden für Lithium-Ionen-Akkus haben in der Regel eine Dicke von bevorzugt 15 $\mu$m bis 30 $\mu$m, weiter bevorzugt von 17 $\mu$m bis 28 $\mu$m, und weiter bevorzugt von 20 $\mu$m bis 25 $\mu$m.

Als Aktivmaterial zur Herstellung von Kathoden für Lithium-Ionen-Akkus werden bevorzugt Lithium-Metalloxide, wie z.B. $LiCoO_2$, $LiMn_2O_4$ und $Li(Ni_xMn_yCo_z)O_2$, sowie VanadiumOxide, Olivine (z.B. $LiFePO_4$) oder wiederaufladbare Lithium-Oxide verwendet. Hierbei bedeutet "$Li(Ni_xMn_yCo_z)O_2$", dass in der Verbindung Nickel, Mangan und Cobalt in verschiedenen Anteilen (hier mit x, y und z bezeichnet) vorhanden sein können, z.B. $Li(Ni_{1/3}Mn_{1/3}Co_{1/3})O_2$. Die Schicht aus Aktivmaterial, die beider Herstellung von Kathoden für Lithium-Ionen-Akkus auf eine Seite des verwendeten Stromkollektors aufgebracht wird, hat in der Regel eine Dicke von 30 $\mu$m bis 235 $\mu$m, bevorzugt 50 $\mu$m bis 200 $\mu$m, bevorzugt 70 $\mu$m bis 180 $\mu$m, weiter bevorzugt 90 $\mu$m bis 150 $\mu$m, und weiter bevorzugt 100 $\mu$m bis 130 $\mu$m.

Für die Herstellung von Anoden für Lithium-Ionen-Akkus werden vorzugsweise Stromkollektoren in Form von Netzen oder Folien aus Kupfer verwendet. Die Stromkollektoren zur Herstellung von Anoden für Lithium-Ionen-Akkus haben in der Regel eine Dicke von bevorzugt 15 $\mu$m bis 30 $\mu$m, weiter bevorzugt von 17 $\mu$m bis 28 $\mu$m, und weiter bevorzugt von 20 $\mu$m bis 25 $\mu$m.

Als Aktivmaterial zur Herstellung von Anoden für Lithium-Ionen-Akkus werden bevorzugt Lithium, Graphit, Lithium-legierten Materialien, Intermetalle oder Silizium verwendet. Besonders bevorzugt wird Graphit als Aktivmaterial zur Herstellung von Anoden für Lithium-Ionen-Akkus. Die Schicht aus Aktivmaterial, die beider Herstellung von Anoden für Lithium-Ionen-Akkus auf eine Seite des verwendeten Stromkollektor aufgebracht wird, hat in der Regel eine Dicke von 20 $\mu$m bis 150 $\mu$m, bevorzugt 30 $\mu$m bis 130 $\mu$m, bevorzugt 40 $\mu$m bis 100 $\mu$m, und weiter bevorzugt 50 $\mu$m bis 80 $\mu$m.

Mit dem erfindungsgemäßen Verfahren lassen sich sowohl Kathoden als auch Anoden schneiden. Entsprechend handelt es sich in einer bevorzugten Ausführungsform des erfindungsgemäßen Verfahrens bei der zu schneidenden Elektrodenfolie um eine Kathodenfolie umfassend einen Stromkollektor aus Aluminium beschichtet mit einem Aktivmaterial für eine Kathode eines Lithium-Ionen-Akkus. In einer weiteren bevorzugten Ausführungsform des erfindungsgemäßen Verfahrens handelt es sich bei der zu schneidenden Elektrodenfolie um eine Anodenfolie umfassend einen Stromkollektor aus Kupfer beschichtet mit einem Aktivmaterial für eine Anode eines Lithium-Ionen-Akkus.

Bei den bereits oben erwähnten **"Elektrodenfolien"** oder **"Elektrodenbahnen"** handelt es sich bevorzugt um bereits mit dem entsprechenden Aktivmaterial beschichtete Stromkollektoren, die zur Verwendung bei der Herstellung einer Batterie (insbesondere eines Lithium-Ionen-Akkus) lediglich in Form geschnitten werden müssen.

Die in einem Elektrodenstapel zwischen der Anode und Kathode liegende **Separator** hat einerseits die Aufgabe die beiden Elektroden elektrisch voneinander zu isolieren, um Kurzschlüsse zu verhindern. Andererseits muss er aber durchlässig für Ionen sein, damit der während der elektrochemischen Reaktion innerhalb der elektrochemischen Zelle auftretende Ionenstrom zwischen Anode und Kathode stattfinden kann. Hierbei handelt es sich um sehr wichtige Funktionen für das Funktionieren der Sekundärbatterie. Folglich werden an die Herstellung der Separatoren bzw. der Separatorenblätter ebenso hohe Anforderungen gestellt, wie an die Herstellung der Elektrodenblätter. Bei einer möglichst geringen Dicke soll der Separator ein guter elektrischer Isolator sein, eine möglichst hohe Porosität besitzen um den Elektrolyten möglicht gut aufnehmen zu können, sowie unter den Bedingungen innerhalb der elektrochemischen Zelle sowohl thermisch als auch chemisch inert sein.

Folglich werden für die Herstellung von Lithium-Ionen-Akkus in der Regel mikroporöse Separatoren verwendet, die ausgewählt werden aus der Liste umfassend: Polymerseparatoren, wie z.B. Polymerseparatoren aus Polypropylen und/oder Polyethylen, keramische Separatoren (z.B. Separion®), laminierte Polymerseparatoren aus einer Abfolge von Polypropylen/Polyethylen/Polypropylen, sowie Vliese aus Glasfasern.

Die Separatoren zur Herstellung von Lithium-Ionen-Akkus haben in der Regel eine Dicke von bevorzugt 15 $\mu$m bis 30 $\mu$m, weiter bevorzugt von 17 $\mu$m bis 28 $\mu$m, und weiter bevorzugt von 20 $\mu$m bis 25 $\mu$m.

Als Elektrolyte die bei der Herstellung von Lithium-Ionen-Akkus verwendet werden und vom Separator aufgesaugt werden, können generell unterteilt werden in flüssige Elektrolyte und polymere Elektrolyte. Dem Fachmann sind gängige Elektrolyte bekannt, die zur Herstellung von Lithium-Ionen-Akkus (und anderen Batterie-Typen) verwendet werden können.

Aus den oben gemachten Ausführungen zu den Elektrodenfolien bzw. den Separatorenfolien, die durch das erfindungemäße Verfahren geschnitten werden können, ist für den Fachmann klar ersichtlich, dass die Wahl der Schnittparameter wie z.B. Laserleistung (in W), der Strahldurchmesser am Bearbeitungsort von Laserschneidstrahl und Lasererwärmungsstrahl, die Leistungsdichte am Bearbeitungsort (in W/cm$^2$) von Laserschneidstrahl und Lasererwärmungsstrahl sowie die Schnittgeschwindigkeit maßgeblich von der Zusammensetzung und der Dicke des zu schneidenden Materials abhängt. Die jeweils am besten geeigneten Parameter müssen daher für jede Ausführungsform einer Elektrodenfolie bzw. einer Separatorenfolie empirisch bestimmt werden.

Hier liegt auch ein zusätzlicher entscheidender Vorteil des erfindungsgemäßen Verfahrens zum Laserschneiden von Elektrodenfolien und/oder Separatorenfolien, der über die reine Partikelvermeidung hinausgeht. Die Verwendung von zwei separaten Laserstrahlen bzw. Laserteilstrahlen, nämlich der Laserschneidstrahl und der Lasererwärmungsstrahl, die überlagert werden, so dass am Bearbeitungsort der Schneidstrahl, der einen geringeren Strahldurchmesser als der Lasererwärmungsstrahl hat, innerhalb der durch den Strahldurchmesser des Lasererwärmungsstrahls definierten Fläche liegt, ermöglicht überraschenderweise die Vermeidung der Partikelbildung beim Laserschneiden von Elektrodenfolien und/oder Separatorenfolien, wie bereits beschrieben. Dass wie gesagt hierzu zwei **separate** Laserstrahlen bzw. Laserteilstrahlen, nämlich der Laserschneidstrahl und der Lasererwärmungsstrahl, verwendet werden, ermöglicht es zudem, die beiden separaten Laserstrahlen bzw. Laserteilstrahlen getrennt voneinander an die jeweils notwendigen technischen Erfordernisse anzupassen. Aus der oben beschriebenen hohen Variabilität des Materials und der Dicke der zu schneidenden Elektrodenfolien bzw. Separatorenfolien wird klar, dass die Möglichkeit der flexiblen Anpassung des erfindungsgemäßen Verfahrens enorm von Vorteil ist, da es die Verwendung zum Schneiden unterschiedlichster Elektrodenfolien bzw. Separatorenfolien ermöglicht.

Beispielhaft kann eine derartige Anpassung dadurch geschehen, dass bei einer Ausführungsform des erfindungsgemäßen Verfahrens, bei dem das Strahlprofil des Laserschneidstrahls unverändert bleibt, während der Lasererwärmungsstrahl defokussiert wird, eine verschiebbare Linse als optisches Element zur Defokussierung des Lasererwärmungsstrahls verwendet wird, wobei durch Verschiebung dieser Linse der Grad der Defokussierung verändert werden kann. Ebenso sind modulare Systeme als optische Elemente zur Variation von Strahlprofilen in dem Strahlengang des Laserschneidstrahls und/oder des Lasererwärmungsstrahls möglich, bei denen zum Beispiel mehrere verschiedene Linsen vorgesehen sind, die jedoch einzeln oder in Kombination miteinander, je nach Bedarf, in den Strahlengang des jeweiligen Laserstrahls eingebracht werden können.

**Beschreibung der Figuren**

**Fig. 1:** zeigt anhand einer bevorzugten Ausführungsform der vorliegenden Erfindung exemplarisch die Strahlprofile der eingesetzten Laserstrahlen. Die Figur zeigt die Strahlprofile (bzw. Leistungsdichteprofile) am Bearbeitungsort. Hierbei sind sowohl der Laserursprungstrahl (8) als auch die aus diesem durch Strahlteilung erzeugten Laserteilstrahlen, nämlich der Laserschneidstrahl (9) und der Lasererwärmungsstrahl (10) dargestellt. Wie hier dargestellt enthält jeder Laserteilstrahl 50% der Leistung des Laserursprungsstrahls (8). Der Laserschneidstrahl (9) wurde nicht in seinem Strahlprofil verändert und hat daher denselben Strahldurchmesser am Bearbeitungsort wie der Laserursprungsstrahl (8), d.h. d1 = d0. Der Lasererwärmungsstrahl (10) hingegen wurde durch Defokussierung in seinem Strahlprofil verändert und hat daher eine geringere maximale Leistungsdichte als der Laserschneidstrahl (9) und einen größeren Strahldurchmesser am Bearbeitungsort als der Laserschneidstrahl (9), $d_2 > d_1$. Es ist zu erkennen, dass in der Randzone (d3 = d2 - d1) die mittlere Leistungsdichte des Lasererwärmungsstrahls (10) größer als die mittlere Leistungsdichte des Laserschneidstrahls (9) ist. Zudem ist das kumulierte Leistungsdichteprofil (15) am Bearbeitungsort von Laserschneidstrahl (9) und der Lasererwärmungsstrahl (10) dargestellt, welches durch Addition der Leistungsdichten der beiden Laserteilstrahlen entsteht. Dieses kumulierte Leistungsdichteprofil (15) am Bearbeitungsort weist eine maximale Leistungsdichte auf, die kleiner als die des Laserursprungsstrahls (8) aber natürlich größer als die des Laserschneidstrahls (9) ist. Zudem hat es einen Strahldurchmesser am Bearbeitungsort (d1 + d2) der größer als der des Laserschneidstrahls (9) aber kleiner als der des Lasererwärmungsstrahls (10) ist, d.h. $d_2 > d1 + d2 > d1$. Es ist zu erkennen, dass durch die Überlagerung von Laserschneidstrahl (9) und Lasererwärmungsstrahl (10) zu dem kumulierten Leistungsdichteprofil (15) am Bearbeitungsort mehr Energie in den Randbereichen vorhanden ist als bei dem Laserursprungsstrahl (8).

**Fig.2:** zeigt eine bevorzugte hierin offenbarte Vorrichtung, wobei die Laserlichtquelle (1), das optische Element zur Strahlteilung (2), das optische Element zur Aufweitung (13) eines Laserstrahls sowie das optische Element zur Strahlüberlagerung (5) auf derselben optischen Ebene in Ausbreitungsrichtung des von der Laserlichtquelle (1) bereitgestellten Ursprungslaserstrahls (8) angeordnet sind. Bei Durchtritt des von der Laserlichtquelle (1) bereitgestellten Ursprungslaserstrahls (8) durch das optische Element zur Strahlteilung (2) wird der Ursprungslaserstrahl (8) in Laserschneidstrahl (9) und Lasererwärmungsstrahl (10) aufgeteilt. Der Laserschneidstrahl (9) behält die Ausbreitungsrichtung des Ursprungslaserstrahls (8) bei und wird somit direkt in Richtung des optischen Elementes zur Strahlüberlagerung (5) weitergeleitet. Zwischen dem optischen Element zur Strahlteilung (2) und dem optischen Element zur Strahlüberlagerung (5) ist im Strahlengang des Laserschneidstrahls (9) ein optisches Element zur Aufweitung (13) eines Laserstrahls in Form eines Teleskops angeordnet, das zu einer Aufweitung des Laserschneidstrahls (9) führt. Durch zwei optische Elemente zur Strahlumlenkung (3) im Strahlengang des Lasererwärmungsstrahls (10) wird dieser in zwei Stufen an dem optischen Element zur Aufweitung (13) eines Laserstrahls vorbeigeführt und so zu dem optischen Element zur Strahlüberlagerung (5) geleitet, dass er von diesem in Ausbreitungsrichtung des Laserschneidstrahls (9) umgelenkt wird und so mit diesem überlagert wird. Danach werden die überlagerten Strahlen (11), also Laserschneidstrahl (9) und Lasererwärmungsstrahl (10), vorzugsweise durch ein optisches Element zur Fokussierung (6) geleitet und so auf den Bearbeitungsort (14) fokussiert. Durch nachgeschaltete Galvanometer-Scanner (7), werden die überlagerten Strahlen (11) gezielt über die zu schneidende Elektrodenfolie oder Separatorenfolie gelenkt. Durch die erfolgte Aufweitung des Laserschneidstrahls (9) und die anschließende Fokussierung, ist der Strahldurchmesser am Bearbeitungsort des Laserschneidstrahls d1 kleiner als der Strahldurchmesser am Bearbeitungsort des Lasererwärmungsstrahls d2.

Fig.3:  zeigt eine weitere bevorzugte hierin offenbarte Vorrichtung, wobei die Laserlichtquelle (1), das optische Element zur Strahlteilung (2), das optische Element zur Defokussierung (4) eines Laserstrahls sowie das optische Element zur Strahlüberlagerung (5) auf derselben optischen Ebene in Ausbreitungsrichtung des von der Laserlichtquelle (1) bereitgestellten Ursprungslaserstrahls (8) angeordnet sind. Bei Durchtritt des von der Laserlichtquelle (1) bereitgestellten Ursprungslaserstrahls (8) durch das optische Element zur Strahlteilung (2) wird der Ursprungslaserstrahl (8) in Laserschneidstrahl (9) und Lasererwärmungsstrahl (10) aufgeteilt. Der Lasererwärmungsstrahl (10) behält die Ausbreitungsrichtung des Ursprungslaserstrahls (8) bei und wird somit direkt in Richtung des optischen Elementes zur Strahlüberlagerung (5) weitergeleitet. Zwischen dem optischen Element zur Strahlteilung (2) und dem optischen Element zur Strahlüberlagerung (5) ist im Strahlengang des Lasererwärmungsstrahls (10) ein optisches Element zur Defokussierung (4) eines Laserstrahls in Form eines Teleskops angeordnet, das zu einer Defokussierung des Lasererwärmungsstrahls (10) führt. Durch zwei optische Elemente zur Strahlumlenkung (3) im Strahlengang des Laserschneidstrahls (9) wird dieser in zwei Stufen an dem optischen Element zur Defokussierung (4) eines Laserstrahls vorbeigeführt und so zu dem optischen Element zur Strahlüberlagerung (5) geleitet, dass er von diesem in Ausbreitungsrichtung des Lasererwärmungsstrahls (10) umgelenkt wird und so mit diesem überlagert wird. Danach werden die überlagerten Strahlen (11), also Laserschneidstrahl (9) und Lasererwärmungsstrahl (10), vorzugsweise durch ein optisches Element zur Fokussierung (6) geleitet und so auf den Bearbeitungsort (14) fokussiert. Durch nachgeschaltete Galvanometer-Scanner (7), werden die überlagerten Strahlen (11) gezielt über die zu schneidende Elektrodenfolie oder Separatorenfolie gelenkt. Durch die erfolgte Defokussierung des Lasererwärmungsstrahls (10), ist der Strahldurchmesser am Bearbeitungsort des Laserschneidstrahls d1 kleiner als der Strahldurchmesser am Bearbeitungsort des Lasererwärmungsstrahls d2.

Fig.4:  zeigt eine weitere bevorzugte hierin offenbarte Vorrichtung, wobei die Laserlichtquelle (1), das optische Element zur Strahlteilung (2), das optische Element zur Defokussierung (4) eines Laserstrahls sowie das optische Element zur Strahlüberlagerung (5) auf derselben optischen Ebene in Ausbreitungsrichtung des von der Laserlichtquelle (1) bereitgestellten Ursprungslaserstrahls (8) angeordnet sind. Zwischen Laserlichtquelle (1) und dem optischen Element zur Strahlteilung (2) ist im Strahlengang des Ursprungslaserstrahls (8) ein Polarisationsdreher (12) angeordnet. Bei Durchtritt des von der Laserlichtquelle (1) bereitgestellten Ursprungslaserstrahls (8), bei dem es sich hier um einen linear polarisierten Laserstrahl handelt, durch den Polarisationsdreher (12) und das optische Element zur Strahlteilung (2) in Form eines Polarisationsstrahlteilers wird der Ursprungslaserstrahl (8) in Laserschneidstrahl (9) und Lasererwärmungsstrahl (10) aufgeteilt. Der Lasererwärmungsstrahl (10) behält die Ausbreitungsrichtung des Ursprungslaserstrahls (8) bei und wird somit direkt in Richtung des optischen Elementes zur Strahlüberlagerung (5) weitergeleitet. Zwischen dem optischen Element zur Strahlteilung (2) und dem optischen Element zur Strahlüberlagerung (5) ist im Strahlengang des Lasererwärmungsstrahls (10) ein optisches Element zur Defokussierung (4) eines Laserstrahls in Form eines Teleskops angeordnet, das zu einer Defokussierung des Lasererwärmungsstrahls (10) führt. Durch zwei optische Elemente zur Strahlumlenkung (3) im Strahlengang des Laserschneidstrahls (9) wird dieser in zwei Stufen an dem optischen Element zur Defokussierung (4) eines Laserstrahls vorbeigeführt. Hierbei ist im Strahlengang des Laserschneidstrahls (9) zwischen dem ersten und dem zweiten optischen Element zur Strahlumlenkung (3) ein optisches Element zur Aufweitung (13) eines Laserstrahls in Form eines Teleskops angeordnet, das zu einer Aufweitung des Laserschneidstrahls (9) führt. Der aufgeweitete Laserschneidstrahl (9) wird so zu dem optischen Element zur Strahlüberlagerung (5) geleitet, dass er von diesem in Ausbreitungsrichtung des Lasererwärmungsstrahls (10) umgelenkt wird und so mit diesem überlagert wird. Danach werden die überlagerten Strahlen (11), also Laserschneidstrahl (9) und Lasererwärmungsstrahl (10), vorzugsweise durch ein optisches Element zur Fokussierung (6) geleitet und so auf den Bearbeitungsort (14) fokussiert. Durch nachgeschaltete Galvanometer-Scanner (7), werden die überlagerten Strahlen (11) gezielt über die zu schneidende Elektrodenfolie oder Separatorenfolie gelenkt. Durch die erfolgte Defokussierung des Lasererwärmungsstrahls (10) sowie die Aufweitung des Laserschneidstrahls (9), ist der Strahldurchmesser am Bearbeitungsort des Laserschneidstrahls d1 kleiner als der Strahldurchmesser am Bearbeitungsort des Lasererwärmungsstrahls d2.

**Fig. 5 A:** zeigt in mikroskopischer Aufsicht eine Elektrodenfolie, die mit einem Verfahren zum Laserschneiden von Elektrodenfolien und Separatorenfolien aus dem Stand der Technik geschnitten wurde. Neben der horizontalen Schnittkante sind deutlich abgelagerte Partikel zu erkennen, welche mit Pfeilen markiert sind. Durch den rechteckigen Rahmen ist ein Bereich eingeschlossen, der in Fig. 5B vergrößert dargestellt ist. Die Aufnahme wurde mit einem 3D Digitalmikroskop im Auflicht gemacht.

**Fig. 5B:** zeigt einen vergrößerten Ausschnitt aus Fig. 5A, bei dem mittig und mit einem Pfeil markiert ein Partikel auf der Oberfläche der geschnittenen Elektrodenfolie zu erkennen ist.

**Fig. 5C:** zeigt eine Schrägansicht einer dreidimensionalen Oberflächenrekonstruktion von Fig. 5B sowie einen Graphen, der das Oberflächenprofil eines im Bild markierten und durch das Partikel verlaufenden Bereiches (helle Schraffur) zeigt. Es ist zu erkennen, dass das Partikel eine Breite von ca. 33 μm und eine Höhe (bezogen auf die Elektrodenoberfläche) von ca, 21 μm aufweist.

**Fig. 5D:** zeigt in mikroskopischer Aufsicht eine Elektrodenfolie, die mit dem erfindungsgemäßen Verfahren zum Laserschneiden von Elektrodenfolien und Separatorenfolien geschnitten wurde. Neben der horizontalen Schnittkante sind keine abgelagerten Partikel zu erkennen.

**Fig. 6:** zeigt eine schematische Aufsicht auf den Bearbeitungsort und die gemäß einer Ausführungsform des erfindungsgemäßen Verfahrens hier vorliegende Überlagerung von Laserschneidstrahl und Lasererwärmungsstrahl. Es ist zu erkennen, dass die optischen Achsen von Laserschneidstrahl und Lasererwärmungsstrahl hier deckungsgleich sind. Zudem ist zu erkennen, dass der Strahldurchmesser des Laserschneidstrahls d1 geringer ist als der Strahldurchmesser am Bearbeitungsort des Lasererwärmungsstrahls d2, wodurch der Randbereich d3 (d3 = d2 - d1) definiert ist. Durch die hierdurch erfolgte erfindungsgemäße Ausdehnung der Wärmeeinflusszone um den eigentlichen Schnittbereich, wird die Bildung bzw. Ablagerung von Partikeln (P) in dem Randbereich d3 vermieden.

**Verzeichnis der Bezugszeichen**

1 - Laserlichtquelle

2 - optisches Element zur Strahlteilung (Strahlteiler)

3 - optisches Element zur Strahlumlenkung

4 - optisches Element zur Defokussierung eines Laserstrahls

5 - optisches Element zur Strahlüberlagerung

6 - optisches Element zur Fokussierung (Fokussieroptik)

7 - Galvanometer-Scanner (zur Strahlablenkung)

8 - Ursprungslaserstrahl

9 - Laserschneidstrahl

10 - Lasererwärmungsstrahl

11 - überlagerte Strahlen (Laserschneidstrahl und Lasererwärmungsstrahl)

12    - Polarisationsdreher

13    - optisches Element zur Aufweitung eines Laserstrahls (Teleskop zur Strahlaufweitung)

14    - Bearbeitungsort

15    - kumuliertes Leistungsdichteprofil (am Bearbeitungsort)

d1    - Strahldurchmesser (am Bearbeitungsort) des Laserschneidstrahls

d2    - Strahldurchmesser (am Bearbeitungsort) des Lasererwärmungsstrahls

P    - Partikel

**Patentansprüche**

1. Verfahren zum Laserschneiden von Elektrodenfolien und/oder Separatorenfolien für elektrochemische Energiespeicher, wobei für das Laserschneiden ein Laserschneidstrahl (9) mit einem Lasererwärmungsstrahl (10) überlagert wird und der Laserschneidstrahl (9) bereits eine zum Laserschneiden der Elektrodenfolien und/oder Separatorenfolien ausreichende Leistungsdichte (in W/cm$^2$) besitzt, oder nach Überlagerung mit dem Lasererwärmungsstrahl (10) eine zum Laserschneiden der Elektrodenfolien und/oder Separatorenfolien ausreichende Leistungsdichte erzeugt wird und der Lasererwärmungsstrahl (10) eine zum Laserschneiden der Elektrodenfolien und/oder Separatorenfolien nicht ausreichende Leistungsdichte aber eine zur Verschmelzung und/oder Verdampfung von beim Laserschneiden entstehenden Partikeln (P) ausreichende Leistungsdichte aufweist und der Lasererwärmungsstrahl (10) einen größeren Strahldurchmesser als der Laserschneidstrahl (9) hat.

2. Verfahren nach Anspruch 1, wobei der Laserschneidstrahl (9) und der Lasererwärmungsstrahl (10) durch Strahlteilung aus einem Ursprungslaserstrahl (8) erzeugt werden, der durch ein optisches Element zur Strahlteilung (2) geleitet und in den Laserschneidstrahl (9) und den Lasererwärmungsstrahl (10) geteilt wird, der Laserschneidstrahl (9) durch ein optisches Element zur Aufweitung eines Laserstrahls (13) und/oder der Lasererwärmungsstrahl (10) durch ein optisches Element zur Defokussierung eines Laserstrahls (4) geleitet wird/werden.

3. Verfahren nach Anspruch 1 oder 2, wobei der Strahldurchmesser d1 des Laserschneidstrahls kleiner als der Strahldurchmesser d2 des Lasererwärmungsstrahls ist und der Strahldurchmesser d1 des Laserschneidstrahls kleiner oder gleich dem Strahldurchmesser d0 des Ursprungslaserstrahls und der Strahldurchmesser d2 des Lasererwärmungsstrahls größer als der Strahldurchmesser d0 des Ursprungslaserstrahls ist oder der Strahldurchmesser d1 des Laserschneidstrahls kleiner als der Strahldurchmesser d0 des Ursprungslaserstrahls und der Strahldurchmesser d2 des Lasererwärmungsstrahls größer oder gleich dem Strahldurchmesser d0 des Ursprungslaserstrahls ist.

4. Verfahren gemäß einem der Ansprüche 1 bis 3, wobei die maximale Leistungsdichte des Lasererwärmungsstrahls (10) im Bereich von 30% bis 60% der maximalen Leistungsdichte des Laserschneidstrahls (9) liegt.

5. Verfahren gemäß einem der Ansprüche 1 bis 4, wobei der Strahldurchmesser d2 des Lasererwärmungsstrahls im Bereich zwischen 110% und 200% des Strahldurchmessers d1 des Laserschneidstrahls liegt.

6. Verfahren gemäß einem der Ansprüche 1 bis 5, wobei in dem Bereich d2 - d1, definiert als der Bereich zwischen dem Strahldurchmesser d2 des Lasererwärmungsstrahls und dem Strahldurchmesser d1 des Laserschneidstrahls, die mittlere Leistungsdichte des Lasererwärmungsstrahls (10) größer als die mittlere Leistungsdichte des Laserschneidstrahls (9) ist.

7. Verfahren gemäß einem der Ansprüche 1 bis 6, **dadurch gekennzeichnet, dass** die maximale Leistungsdichte des Lasererwärmungsstrahls (10) im Bereich von 30% bis 60% der maximalen Leistungsdichte des Laserschneidstrahls (9) liegt und dass in dem Bereich d2 - d1, definiert als der Bereich zwischen dem Strahldurchmesser d2 des Lasererwärmungsstrahls und dem Strahldurchmesser d1 des Laserschneidstrahls, die mittlere Leistungsdichte des Lasererwärmungsstrahls (10) größer als die mittlere Leistungsdichte des Laserschneidstrahls (9) ist.

8. Verfahren gemäß einem der Ansprüche 1 bis 7, wobei sich bei der Überlagerung des Laserschneidstrahls (9) und des Lasererwärmungsstrahl (10) die Leistungsdichten von Laserschneidstrahl (9) und Lasererwärmungsstrahl (10) addieren, so dass die addierte maximale Leistungsdichte im Bereich von 65% bis 85% der maximalen Leistungsdichte des Ursprungslaserstrahls (8) liegt.

9. Verfahren gemäß einem der Ansprüche 1 bis 8, wobei sich bei der Überlagerung des Laserschneidstrahls (9) und des Lasererwärmungsstrahl (10) die Leistungsdichten von Laserschneidstrahl (9) und Lasererwärmungsstrahl (10) addieren und sich ein kumuliertes Leistungsdichteprofil (15) ergibt, welches bei einer zum Laserschneiden der Elektrodenfolien und/oder Separatorenfolien ausreichenden Leistungsdichte eine Schnittbreite $ds_K$ definiert mit $ds_K$ kleiner d1 besitzt.

10. Verfahren gemäß Anspruch 9, wobei die Leistungsdichte des kumulierten Leistungsdichteprofils (15) in dem Bereich $ds_K$ bis $2ds_K$ mindestens 25% größer als die Leistungsdichte des Ursprungslaserstrahls (8) in diesem Bereich ist.

**Claims**

1. A method for laser cutting of electrode foils and/or separator foils for electrochemical energy storages, wherein for laser cutting a laser cutting beam (9) is superimposed with a laser heating beam (10) and the laser cutting beam (9) already has a power density sufficient for laser cutting the electrode foils and/or separator foils (in W/cm$^2$) or after superimposition with the laser heating beam (10) a power density sufficient for laser cutting the electrode foils and/or separator foils is generated, and the laser heating beam (10) does not have a power density sufficient for laser cutting the electrode foils and/or separator foils, but having apower density sufficient for merging and/or evaporating particles (P) formed during the laser cutting and the laser heating beam (10) has a larger beam diameter than the laser cutting beam (9).

2. The method according to claim 1, wherein the laser cutting beam (9) and the laser heating beam (10) are generated by beam splitting from an original laser beam (8) which is passed through an optical element for beam splitting (2) and is divided into the laser cutting beam (9) and the laser heating beam (10), the laser cutting beam (9) is passed through an optical element for expanding a laser beam (13) and/or the laser heating beam (10) is passed through an optical element for defocusing a laser beam (4).

3. The method according to claim 1 or 2, wherein the beam diameter d1 of the laser cutting beam is less than the beam diameter d2 of the laser heating beam and the beam diameter d1 of the laser cutting beam is less than or equal to the beam diameter d0 of the original laser beam and the beam diameter d2 of the laser heating beam is larger than the beam diameter d0 of the original laser beam or the beam diameter d1 of the laser cutting beam is less than the beam diameter d0 of the original laser beam and the beam diameter d2 of the laser heating beam is larger than or equal to the beam diameter d0 of the original laser beam.

4. The method according to any one of claims 1 to 3, wherein the maximum power density of the laser heating beam (10) is in the range of 30% to 60% of the maximum power density of the laser cutting beam (9).

5. The method according to any one of claims 1 to 4, wherein the beam diameter d2 of the laser heating beam is in the range between 110 % and 200 % of the beam diameter d1 of the laser cutting beam.

6. The method according to any one of claims 1 to 5, wherein in the range d2 - d1, defined as the range between the beam diameter d2 of the laser heating beam and the beam diameter d1 of the laser cutting beam, the average power density of the laser heating beam (10) is greater than the average power density of the laser cutting beam (9).

7. The method according to any one of claims 1 to 6, **characterized in that** the maximum power density of the laser heating beam (10) is in the range between 30% to 60% of the maximum power density of the laser cutting beam (9) and in the range d2 - d1, defined as the range between the beam diameter d2 of the laser heating beam and the beam diameter d1 of the laser cutting beam, the average power density of the laser heating beam (10) is greater than the average power density of the laser cutting beam (9).

8. The method according to any one of claims 1 to 7, wherein when the laser cutting beam (9) and the laser heating beam (10) are superimposed, the power densities of the laser cutting beam (9) and the laser heating beam (10) add up, so that the added maximum power density is in the range between 65% to 85% of the maximum density power of the original laser beam (8).

9. The method according to any one of claims 1 to 8, wherein when the laser cutting beam (9) and the laser heating beam (10) are superimposed, the power densities of the laser cutting beam (9) and laser heating beam (10) add up resulting in a cumulative power density profile (15), which has a cutting width $ds_K$ defined with $ds_K$ less than d1 at a power density sufficient for laser cutting of the electrode foils and/or separator foils.

10. The method according to claim 9, wherein the power density of the cumulative power density profile (15) in the range between $ds_K$ to $2ds_K$ is at least 25% greater than the power density of the original laser beam (8) in said range.

**Revendications**

1. Une méthode de découpe laser des feuilles d'électrodes et/ou des feuilles de séparation pour le stockage de l'énergie électrochimique, où un faisceau de découpe laser (9) est superposé à un faisceau laser chauffant (10) pour la découpe laser et où le faisceau de découpe laser (9) présente une densité de puissance suffisante pour la découpe au laser des feuilles d'électrodes et/ou des feuilles de séparation (en W/cm$^2$), ou, après superposition avec le faisceau laser chauffant (10), une densité de puissance suffisante pour la découpe au laser des feuilles d'électrodes et/ou des feuilles de séparation est générée, et le faisceau laser chauffant (10) ne dispose pas d'une densité de puissance suffisante pour réaliser la découpe au laser des feuilles d'électrodes et/ou des feuilles de séparation, mais dispose d'une densité de puissance suffisante pour fusionner et/ou évaporer les particules (P) formées lors de la découpe au laser et le faisceau laser chauffant (10) présente un diamètre plus élevé que le faisceau de découpe laser (9).

2. La méthode selon la revendication 1, où le faisceau de découpe laser (9) et le faisceau laser chauffant (10) sont générés par la division d'un faisceau laser d'origine (8) qui a été conduit à travers un élément optique de division de faisceau (2) afin de créer le faisceau de découpe laser (9) et le faisceau laser chauffant (10), le faisceau de découpe laser (9) étant conduit à travers un élément optique d'expansion du faisceau laser (13) et/ou le faisceau laser chauffant (10) étant conduit à travers un élément optique de défocalisation du faisceau laser (4).

3. La méthode selon la revendication 1 ou 2, où le diamètre du faisceau d1 du faisceau de découpe laser est inférieur au diamètre du faisceau d2 du faisceau laser chauffant et le diamètre du faisceau d1 du faisceau de découpe laser est inférieur ou égal au diamètre du faisceau d0 du faisceau laser d'origine et le diamètre du faisceau d2 du faisceau laser chauffant est supérieur au diamètre du faisceau d0 du faisceau laser d'origine ou le diamètre du faisceau d1 du faisceau de découpe laser est inférieur au diamètre du faisceau d0 du faisceau laser d'origine et le diamètre du faisceau d2 du faisceau laser chauffant est supérieur ou égal au diamètre du faisceau d0 du faisceau laser d'origine.

4. La méthode selon l'une ou l'autre des revendications 1 à 3, où la densité de puissance maximale du faisceau laser chauffant (10) est comprise entre 30 % et 60 % de la densité de puissance maximale du faisceau de découpe laser (9).

5. La méthode selon l'une ou l'autre des revendications 1 à 4, où le diamètre du faisceau d2 du faisceau laser chauffant est compris entre 110 % et 200 % du diamètre du faisceau d1 du faisceau de découpe laser.

6. La méthode selon l'une ou l'autre des revendications 1 à 5, où dans la plage d2 - d1, définie comme la plage comprise entre le diamètre du faisceau d2 du faisceau laser chauffant et le diamètre du faisceau d1 du faisceau de découpe laser, la densité de puissance moyenne du faisceau laser chauffant (10) est supérieure à la densité de puissance moyenne du faisceau de découpe laser (9).

7. La méthode selon l'une ou l'autre des revendications 1 à 6, **caractérisée en ce que** la densité de puissance maximale du faisceau laser chauffant (10) est comprise entre 30 % et 60 % de la densité de puissance maximale du faisceau de découpe laser (9) et où dans la plage d2 - d1, définie comme la plage comprise entre le diamètre du faisceau d2 du faisceau laser chauffant et le diamètre du faisceau d1 du faisceau de découpe laser, la densité de puissance moyenne du faisceau laser chauffant (10) est supérieure à la densité de puissance moyenne du faisceau de découpe laser (9).

8. La méthode selon l'une ou l'autre des revendications 1 à 7, où, lorsque le faisceau de découpe laser (9) et le faisceau laser chauffant (10) sont superposés, les densités de puissance du faisceau de découpe laser (9) et du faisceau laser chauffant (10) s'additionnent, de sorte que la densité de puissance maximale additionnée soit comprise entre 65 % et 85 % de la densité de puissance maximale du faisceau laser d'origine (8).

**9.** La méthode selon l'une ou l'autre des revendications 1 à 8, où lorsque le faisceau de découpe laser (9) et le faisceau laser chauffant (10) sont superposés, les densités de puissance du faisceau de découpe laser (9) et du faisceau laser chauffant (10) s'additionnent afin d'obtenir un profil de densité de puissance cumulée (15), présentant une largeur de coupe $ds_K$ définie avec $ds_K$ inférieure à d1 à une densité de puissance suffisante pour la découpe au laser des feuilles d'électrodes et/ou des feuilles de séparation.

**10.** La méthode selon la revendication 9, où la densité de puissance du profil de densité de puissance cumulée (15) comprise entre $ds_K$ et $2ds_K$ est supérieure d'au moins 25 % à la densité de puissance du faisceau laser d'origine (8) dans ladite plage de valeurs.

**Fig. 1**

**Fig. 2**

**Fig. 3**

**Fig. 4**

## Fig. 5A

## Fig. 5B

## Fig. 5C

## Fig. 5D

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013050088 A1